(19) Europäisches Patentamt / European Patent Office / Office européen des brevets

(11) **EP 4 333 529 A1**

(12) **EUROPEAN PATENT APPLICATION**
published in accordance with Art. 153(4) EPC

(43) Date of publication:
**06.03.2024   Bulletin 2024/10**

(21) Application number: **22815162.7**

(22) Date of filing: **27.05.2022**

(51) International Patent Classification (IPC):
**H04W 72/04** (2023.01)

(52) Cooperative Patent Classification (CPC):
**H04L 5/00; H04L 27/26; H04W 72/04**

(86) International application number:
**PCT/CN2022/095468**

(87) International publication number:
**WO 2022/253116 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2021   CN 202110595979**

(71) Applicant: **Huawei Technologies Co., Ltd.**
**Shenzhen, Guangdong 518129 (CN)**

(72) Inventors:
• **MA, Qianli**
  **Shenzhen, Guangdong 518129 (CN)**
• **HUANG, Huang**
  **Shenzhen, Guangdong 518129 (CN)**
• **FERDINAND, Nuwan Suresh**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **MULTI-USER COMMUNICATION METHOD AND RELATED COMMUNICATION APPARATUS**

(57)    Embodiments of this application disclose a multi-user communication method and a related communication apparatus. The method includes: A communication device obtains first information and second information. The first information indicates channel information of a first channel on a first frequency domain resource. The second information indicates channel information of a second channel on the first frequency domain resource. The first channel and the second channel overlap with each other on the first frequency domain resource. Phases of signals transmitted on symmetric subcarriers of the first channel are opposite. Phases of signals transmitted on symmetric subcarriers of the second channel are opposite. The communication device determines phase precoding information based on the first information and the second information. After precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource. According to this method, demodulation performance of a communication signal can be improved.

S101. A communication device obtains first information and second information, where the first information indicates channel information of a first channel on a first frequency domain resource, and the second information indicates channel information of a second channel on the first frequency domain resource

S102. The communication device determines precoding information based on the first information and the second information

FIG. 16

## Description

This application claims priority to Chinese Patent Application No. 202110595979.1, filed with the China National Intellectual Property Administration on May 29, 2021 and entitled "MULTI-USER COMMUNICATION METHOD AND RELATED COMMUNICATION APPARATUS", which is incorporated herein by reference in its entirety.

## TECHNICAL FIELD

This application relates to the field of communication technologies, and in particular, to a multi-user communication method and a related communication apparatus.

## BACKGROUND

With the increasing development of wireless communication, the high frequency (a frequency band above 6 GHz, mainly including 28 GHz, 39 GHz, 60 GHz, 73 GHz, and the like) has become a research and development hotspot due to its abundant frequency band resources. The high frequency may provide a large bandwidth and a highly integrated antenna array for communication, to implement a high throughput. To reduce a peak-to-average power ratio (peak-to-average power ratio, PAPR) in high-frequency communication, in a high-frequency communication scenario, a communication signal may be transmitted in a real and imaginary part separation manner.

However, due to separation between a real part signal and an imaginary part signal of the communication signal, the bandwidth required for transmitting the communication signal is increased, and the communication signal needs to occupy a part of extra bandwidth to ensure spectrum shaping without loss of performance. In other words, the PAPR needs to be reduced at the cost of using more bandwidth. Currently, to improve frequency utilization, bandwidths used by different terminals may have an overlapping part. However, in such a manner, signals transmitted in the bandwidth of the overlapping part may interfere with each other, and performance of demodulating the signals is degraded

## SUMMARY

This application provides a multi-user communication method and a related communication apparatus, to improve performance of demodulating a communication signal.

According to a first aspect, this application provides a multi-user communication method. The method includes: A communication device obtains first information and second information. The first information indicates channel information of a first channel on a first frequency domain resource, the second information indicates channel information of a second channel on the first frequency domain resource, the first channel is a channel between a first terminal and an access network device, the second channel is a channel between a second terminal and the access network device, and the first channel and the second channel overlap with each other on the first frequency domain resource. Phases of signals transmitted on symmetric subcarriers on the first channel are opposite, and phases of signals transmitted on symmetric subcarriers on the second channel are opposite. The communication device determines phase precoding information based on the first information and the second information. After precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource. Through this method, performance of demodulating a communication signal can be improved.

With reference to the first aspect, in a possible implementation, the communication device is the access network device or the first terminal. The phase precoding information is information used by the second terminal to precode a second signal. The second signal is a signal on the first frequency domain resource of the second channel. The method further includes: The communication device sends a first indication message to the second terminal. The first indication message indicates the phase precoding information.

With reference to the first aspect, in a possible implementation, the communication device is the access network device. The phase precoding information includes first phase precoding information used by the first terminal to precode a first signal, where the first signal is a signal on the first frequency domain resource of the first channel; and second phase precoding information used by the second terminal to precode a second signal, where the second signal is a signal on the first frequency domain resource of the second channel. The method further includes: The communication device sends a second indication message to the first terminal. The second indication message indicates the first phase precoding information. The communication device sends a third indication message to the second terminal. The third indication message indicates the second phase precoding information.

With reference to the first aspect, in a possible implementation, the communication device is the first terminal. The phase precoding information is information used by the first terminal to precode a first signal. The first signal is a signal on the first frequency domain resource of the first channel. The method further includes: The communication device precodes the first signal based on the phase precoding information.

With reference to the first aspect, in a possible implementation, the communication device is the first terminal. The phase precoding information includes first phase precoding information used by the first terminal to precode a first signal, where the first signal is a signal on the first frequency domain resource of the first channel; and second phase precoding information used by the second terminal to precode a second signal, where the second signal is a signal on the first frequency domain resource of the second channel. The method further includes: The communication device precodes the first signal based on the first phase precoding information. The communication device sends a fourth indication message to the second terminal. The fourth indication message indicates the second phase precoding information.

With reference to the first aspect, in a possible implementation, the communication device is the access network device. That the communication device obtains the first information and the second information includes: The communication device sends a fifth indication message to the first terminal. The fifth indication message indicates the first terminal to send a first uplink reference signal to the communication device. The communication device sends a sixth indication message to the second terminal. The sixth indication message indicates the second terminal to send a second uplink reference signal to the communication device. The communication device receives the first uplink reference signal sent by the first terminal and the second uplink reference signal sent by the second terminal. The communication device determines the first information based on the first uplink reference signal, and determines the second information based on the second uplink reference signal.

With reference to the first aspect, in a possible implementation, a sending time of the first uplink reference signal is different from a sending time of the second uplink reference signal, or the first uplink reference signal and the second uplink reference signal are orthogonal signals.

With reference to the first aspect, in a possible implementation, the fifth indication message indicates the first terminal to send the first uplink reference signal to the communication device on a second frequency domain resource. The second frequency domain resource is a first half or a second half of the first frequency domain resource. The sixth indication message indicates the second terminal to send the second uplink reference signal to the communication device on a third frequency domain resource. The third frequency domain resource is a first half or a second half of the first frequency domain resource.

With reference to the first aspect, in a possible implementation, the fifth indication message indicates the first terminal to send the first uplink reference signal to the communication device on a fourth frequency domain resource. The fourth frequency domain resource is a first half or a second half of a first half of the first frequency domain resource, or a first half or a second half of a second half of the first frequency domain resource. The sixth indication message indicates the second terminal to send the first uplink reference signal to the communication device on a fifth frequency domain resource. The fifth frequency domain resource is a first half or a second half of a first half of the first frequency domain resource, or a first half or a second half of a second half of the first frequency domain resource. The fourth frequency domain resource is different from the fifth frequency domain resource.

With reference to the first aspect, in a possible implementation, the first channel and the second channel are line of sight LOS channels. The fifth indication message indicates the first terminal to send the first uplink reference signal to the communication device on one subcarrier on the first frequency domain resource. The sixth indication message indicates the second terminal to send the second uplink reference signal to the communication device on one subcarrier on the first frequency domain resource.

With reference to the first aspect, in a possible implementation, the communication device is the first terminal. That the communication device obtains the first information and the second information includes: The communication device receives a seventh indication message from the access network device. The seventh indication message indicates that the first channel and the second channel overlap with each other on the first frequency domain resource. The communication device receives an eighth indication message from the access network device. The eighth indication message indicates the communication device to obtain the second information from the second terminal.

The communication device sends a ninth indication message to the second terminal based on the eighth indication message. The ninth indication message indicates the second terminal to send the second information to the communication device. The communication device receives the second information from the second terminal. The communication device receives a downlink reference signal from the access network device. The communication device determines the first information based on the downlink reference signal.

With reference to the first aspect, in a possible implementation, the second information includes channel information of the second channel on a second frequency domain resource, and the second frequency domain resource is a first half or a second half of the first frequency domain resource.

With reference to the first aspect, in a possible implementation, the second channel is a line of sight LOS channel, and the second information includes channel information corresponding to one subcarrier of the second channel.

With reference to the first aspect, in a possible implementation, the communication device is the access network device. The phase precoding information is information used by the access network device to precode a signal on the first frequency domain resource of the first channel and/or information used by the access network device to precode a signal on the first frequency domain resource of the second channel. The method further includes: The communication device precodes the signal on the first frequency domain resource of the first channel and/or the signal on the first frequency domain resource of the second channel based on the phase precoding information.

With reference to the first aspect, in a possible implementation, the method further includes: The communication device sends a seventh indication message to the first terminal and the second terminal. The seventh indication message indicates that the first channel and the second channel overlap with each other on the first frequency domain resource.

With reference to the first aspect, in a possible implementation, the method further includes: The communication device sends a tenth indication message to the first terminal. The tenth indication message indicates the first terminal to obtain a fourth signal received by the second terminal on the first frequency domain resource, or indicates the first terminal to send, to the second terminal, a third signal received by the first terminal on the first frequency domain resource. The communication device sends an eleventh indication message to the second terminal. The eleventh indication message indicates the second terminal to obtain the third signal received by the first terminal on the first frequency domain resource, or indicates the second terminal to send, to the first terminal, the fourth signal received by the second terminal on the first frequency domain resource.

With reference to the first aspect, in a possible implementation, the communication device is the first terminal. The phase precoding information is information used by the access network device to precode a signal on the first frequency domain resource of the first channel and/or information used by the access network device to precode a signal on the first frequency domain resource of the second channel. The method further includes: The communication device sends the phase precoding information to the access network device.

With reference to the first aspect, in a possible implementation, the method further includes: The communication device receives a signal that is obtained after the precoding is performed and that is sent by the access network device. The communication device receives a tenth indication message sent by the access network device. The tenth indication message indicates the communication device to obtain a fourth signal received by the second terminal on the first frequency domain resource, or indicates the communication device to send, to the second terminal, a third signal received by the first terminal on the first frequency domain resource.

With reference to the first aspect, in a possible implementation, the communication device is the access network device. The method further includes: The communication device receives the first signal sent by the first terminal through the first frequency domain resource of the first channel. The communication device receives the second signal sent by the second terminal through the first frequency domain resource of the second channel. The communication device performs demodulation based on the first signal, the second signal, and the phase precoding information to obtain data information sent by the first terminal and data information sent by the second terminal.

With reference to the first aspect, in a possible implementation, the communication device is the first terminal. The method further includes: The communication device receives the third signal sent by the access network device on the first frequency domain resource. The communication device receives the fourth signal that is sent by the second terminal and that is received by the second terminal on the first frequency domain resource. The communication device performs demodulation based on the third signal, the fourth signal, and the phase precoding information to obtain data information sent by the access network device to the communication device.

According to a second aspect, this application provides a communication apparatus. The communication apparatus has some or all functions of the communication apparatus in the method example in the first aspect. For example, functions of the communication apparatus may have some or all functions of embodiments of this application, or may have a function of independently implementing any embodiment in this application. The function may be implemented by hardware, or may be implemented by hardware executing corresponding software. The hardware or the software includes one or more units or modules corresponding to the functions.

In an implementation, a structure of the communication apparatus may include a processing unit and a transceiver unit. The processing unit is configured to support the communication apparatus in performing a corresponding function in the foregoing method. The transceiver unit is configured to support communication between the communication apparatus and another device. The communication apparatus may further include a storage unit. The storage unit is coupled to the processing unit and the sending unit, and the storage unit stores a computer program and data that are necessary for the communication apparatus.

In an implementation, the communication apparatus includes a processing unit and a transceiver unit. The transceiver unit is configured to obtain first information and second information. The first information indicates channel information of a first channel on a first frequency domain resource, the second information indicates channel information of a second channel on the first frequency domain resource, the first channel is a channel between a first terminal and an access network device, the second channel is a channel between a second terminal and the access network device, and the first channel and the second channel overlap with each other on the first frequency domain resource. Phases of signals transmitted on symmetric subcarriers on the first channel are opposite, and phases of signals transmitted on symmetric subcarriers on the second channel are opposite. The processing unit is configured to determine phase precoding information based on the first information and the second information. After precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource.

For example, the processing unit may be a processor, the transceiver unit may be a transceiver or a communication interface, and the storage unit may be a memory.

In an implementation, the communication apparatus includes a processor. The processor is coupled to a memory. The memory is configured to store program code. The processor is configured to invoke the program code from the memory to obtain first information and second information, where the first information indicates channel information of a first channel on a first frequency domain resource, the second information indicates channel information of a second channel on the first frequency domain resource, the first channel is a channel between a first terminal and an access network device, the second channel is a channel between a second terminal and the access network device, and the first channel and the second channel overlap with each other on the first frequency domain resource, where phases of signals transmitted on symmetric subcarriers on the first channel are opposite, and phases of signals transmitted on symmetric subcarriers on the second channel are opposite; and further determine phase precoding information based on the first information and the second information, where after precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource.

According to a third aspect, this application provides a communication apparatus. The communication apparatus includes a logic circuit and an input/output interface. The input/output interface is configured to obtain first information and second information. The logic circuit is configured to process the first signal and the second signal, and perform the method described in the first aspect or any possible implementation of the first aspect.

According to a fourth aspect, this application provides a computer-readable storage medium. The computer-readable storage medium is configured to store instructions. When the instructions are executed, the method described in the first aspect or any possible implementation of the first aspect is implemented.

According to a fifth aspect, this application provides a computer program product, where the computer program product includes a computer program or instructions. When the computer program or the instructions are run on a computer, the computer is enabled to perform the method described in the first aspect or any possible implementation of the first aspect.

## BRIEF DESCRIPTION OF DRAWINGS

To describe the technical solutions in embodiments of this application or in the conventional art more clearly, the following briefly describes the accompanying drawings for describing embodiments or the conventional art.

FIG. 1 is a schematic diagram of a network architecture according to an embodiment of this application;
FIG. 2 is a schematic flowchart of processing of a DFT-s-OFDM technology according to an embodiment of this application;
FIG. 3 is a schematic flowchart of processing an SC-QAM signal at a transmit end and a receive end according to an embodiment of this application;
FIG. 4 is a schematic flowchart of processing of a DFT-s-OFDM with FDSS technology according to an embodiment of this application;
FIG. 5 is a block diagram of implementation at a transmit end of SC-OQAM according to an embodiment of this application;
FIG. 6 is a schematic diagram of an SC-QAM waveform according to an embodiment of this application;
FIG. 7 is a schematic diagram of an SC-OQAM waveform according to an embodiment of this application;
FIG. 8 is a schematic flowchart of processing of a DFT-s-OFDM with FTSS technology according to an embodiment of this application;
FIG. 9 is a schematic diagram of a waveform of DFT-s-OFDM with FTSS according to an embodiment of this application;
FIG. 10 is a schematic diagram of channel overlapping according to an embodiment of this application;
FIG. 11 is a flowchart of signal processing according to an embodiment of this application;
FIG. 12 is a schematic diagram of a channel according to an embodiment of this application;
FIG. 13 is a schematic diagram of another channel according to an embodiment of this application;
FIG. 14 is a schematic diagram of another channel according to an embodiment of this application;
FIG. 15 is a schematic diagram of a multi-user multiplexing channel according to an embodiment of this application;

FIG. 16 is a flowchart of a multi-user communication method according to an embodiment of this application;

FIG. 17 is a flowchart of another multi-user communication method according to an embodiment of this application;

FIG. 18 is a schematic diagram of a frequency domain resource for sending a first uplink reference signal and a second uplink signal according to an embodiment of this application;

FIG. 19 is a schematic diagram of another frequency domain resource for sending a first uplink reference signal and a second uplink signal according to an embodiment of this application;

FIG. 20 is a schematic diagram of another frequency domain resource for sending a first uplink reference signal and a second uplink signal according to an embodiment of this application;

FIG. 21 is a flowchart of another multi-user communication method according to an embodiment of this application;

FIG. 22 is a schematic diagram of a frequency domain resource corresponding to a second signal according to an embodiment of this application;

FIG. 23 is a schematic diagram of a frequency domain resource corresponding to a second signal according to an embodiment of this application;

FIG. 24 is a flowchart of another multi-user communication method according to an embodiment of this application;

FIG. 25 is a flowchart of another multi-user communication method according to an embodiment of this application;

FIG. 26 is a schematic diagram of a communication apparatus according to an embodiment of this application;

FIG. 27 is a schematic diagram of a communication apparatus according to an embodiment of this application; and

FIG. 28 is a schematic diagram of a structure of a chip according to an embodiment of this application.

## DESCRIPTION OF EMBODIMENTS

The following describes in detail technical solutions in embodiments of this application.

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should also be understood that, the term "and/or" used in this application indicates and includes any or all possible combinations of one or more associated listed items.

It should be further understood that, "first", "second", "third", "fourth", and various numbers in this specification are merely used for differentiation for ease of description, and are not intended to limit the scope of embodiments of this application.

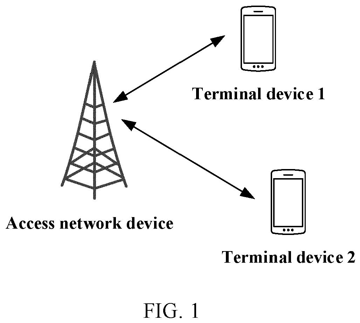

Embodiments of this application may be applied to a network architecture shown in FIG. 1. The network architecture shown in FIG. 1 is a network architecture of a wireless communication system. The network architecture usually includes at least a terminal device 1, a terminal device 2, and an access network device. A quantity and forms of the devices do not constitute a limitation on embodiments of this application. In embodiments of this application, the terminal device and the access network device may communicate with each other through a single carrier. In embodiments of this application, a channel of the terminal device 1 and a channel of the terminal device 2 have an overlapping part. In other words, the terminal device 1 and the terminal device 2 share a frequency domain resource.

It should be noted that the wireless communication system mentioned in embodiments of this application includes, but is not limited to, an Internet of Things (Internet of Things, IoT) system, a long-term evolution (long-term evolution, LTE) system, a 5th generation (5th generation, 5G) mobile communication system, a 6th generation (6th generation, 6G) mobile communication system, and a future mobile communication system. In some embodiments, technical solutions in embodiments of this application may be further applied to a wireless local area network (Wireless Local Area Network, WLAN) network, may be further applied to an Internet of Vehicles (Vehicle-to-everything, V2X) network, may be further applied to a non-terrestrial network (non-terrestrial network, NTN), a satellite and high-altitude platform (satellites and High-Altitude Platform, HAP), or an enhanced Internet of Things (LTE enhanced MTO, eMTC), or may be applied to another network or the like. In some other embodiments, technical solutions of embodiments of this application may be further applied to a communication-radar integrated communication system, a terahertz communication system, a communication system with a higher frequency, and the like. This is not specifically limited in this application.

The access network device in embodiments of this application may be a base station (Base Station, BS). The base station may provide a communication service for a plurality of terminal devices, and a plurality of base stations may also provide a communication service for a same terminal device. In embodiments of this application, the base station is an apparatus deployed in a radio access network to provide a wireless communication function for a terminal device. The base station device may be a base station, a relay station, or an access point. The base station may be an eNB or an eNodeB (evolved NodeB) in long-term evolution (long-term evolution, LTE). The base station device may alternatively be a radio controller in a cloud radio access network (Cloud Radio Access Network, CRAN) scenario. The base station device may alternatively be a base station device in a 5G network or an access network device in a future evolved PLMN network. The base station device may alternatively be a wearable device, an in-vehicle device, or the like. In embodiments of this application, an apparatus configured to implement a function of the access network device may be the access network device, or may be an apparatus that can support the access network device in implementing the function, for example, a chip system. The apparatus may be installed in the access network device.

The terminal device in embodiments of this application may also be referred to as a terminal, and may be a device having a wireless transceiver function. The terminal device in embodiments of this application may include a user equipment (user equipment, UE), an access terminal, a UE unit, a UE station, a mobile station, a remote station, a remote terminal, a mobile device, a UE terminal, a terminal, a wireless communication device, a UE agent, or a UE apparatus that has a wireless communication function. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device with a wireless communication function, a computing device, or another processing device connected to a wireless modem, an unmanned aerial vehicle (or UVA for short) (unmanned aerial vehicle/drones, UVA), an in-vehicle device, a wearable device, a terminal device in a future 5G network, a terminal device in a future evolved PLMN network, or the like. In embodiments of this application, an apparatus configured to implement a function of the terminal may be a terminal, or may be an apparatus, for example, a chip system, that can support the terminal in implementing the function. The apparatus may be installed in the terminal. In this embodiment of this application, the chip system may include a chip, or may include a chip and another discrete component.

This embodiment of this application may be applied to a device to device (device to device, D2D) system, a machine to machine (machine to machine, M2M) system, a vehicle to everything (vehicle to everything, V2X) system, and the like.

This embodiment of this application may be applied to a next-generation microwave scenario, an NR-based microwave scenario, a backhaul (integrated access backhaul, IAB) scenario, or the like.

Embodiments of this application may be applied to an uplink transmission scenario, that is, a scenario in which the terminal device sends an uplink signal to the access network device, or may be applied to a downlink transmission scenario, that is, a scenario in which the access network device sends a downlink signal to the terminal device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some concepts in embodiments of this application.

(1) Peak-to-average power ratio (peak to average power ratio, PAPR)

A radio signal, observed in time domain, is a sine wave with a changing amplitude. The amplitude is not constant. A peak amplitude of a signal in one periodicity is different from a peak amplitude in another periodicity. Therefore, every periodicity has a different average power and a different peak power. In a long periodicity, the peak power is a maximum transient power that occurs at a specific probability. The probability is usually 0.01% (that is, $10^{-4}$). At this probability, a ratio of the peak power to a total average power of a system is a PAPR.

To send a signal of a wireless communication system to remote place, power amplification needs to be performed. Due to the limitation of the technology and device costs, a power amplifier usually performs linear amplification within a range and may cause signal distortion beyond the range. Signal distortion may cause a receive end receiving a signal to fail to correctly parse the signal. To ensure that a peak power of the signal still falls within a linear range within which the power amplifier can normally perform power amplification, an average power of the sent signal needs to be reduced. This manner causes low efficiency of the power amplifier, or is equivalent to a smaller coverage area.

Because a signal of orthogonal frequency division multiplexing (orthogonal frequency division multiplexing, OFDM) on a carrier is represented as a sine (sine) function, there is smearing on the left and right sides. Smearing of a plurality of carriers may be superimposed at a distance, to form a point with a high peak power at a specific probability, that is, a problem of an excessively high PAPR is easily caused by using an OFDM waveform.

(2) Single carrier

A single carrier has a lower PAPR than that of an OFDM waveform, and a scenario of transmitting data using a single carrier-based waveform is considered in the present invention. The single carrier includes, but is not limited to, the following waveforms: a single carrier-quadrature amplitude modulation (single carrier-quadrature amplitude modulation, SC-QAM) waveform, a single carrier-offset quadrature amplitude modulation (Single carrier-Offset quadrature amplitude modulation, SC-OQAM) waveform, a DFT-s-OFDM waveform, an orthogonal frequency division multiplexing (discrete Fourier transform spread orthogonal frequency division multiplexing, DFT-s-OFDM with FTSS) waveform extended by using a single carrier-based transform, a DFT-s-OFDM signal carrying real and imaginary part separation, a DFT-s-OFDM signal carrying a pulse amplitude modulation (pulse amplitude modulation, PAM) constellation, a shaping filter-added DFT-s-OFDM signal carrying real and imaginary part separation, a shaping filter-added DFT-s-OFDM signal carrying a PAM constellation, a unique word discrete Fourier transform spread OFDM (unique word discrete Fourier transform spread OFDM, uw-DFT-s-OFDM) waveform, a uw-DFT-s-OFDM with frequency-domain truncated spectrum shaping (uw-DFT-s-OFDM with FTSS) waveform, a uw-DFT-s-OFDM signal carrying real and imaginary part separation, a uw-DFT-s-OFDM signal carrying a pulse amplitude modulation constellation, a shaping filter-added uw-DFT-s-OFDM signal carrying real and imaginary part separation, a shaping filter-added uw-DFT-s-OFDM signal carrying a PAM constellation, a zero-tail discrete Fourier transform spread orthogonal frequency division multiplexing (zero-tail discrete Fourier transform spread OFDM, zt-DFT-s-OFDM) waveform, and a zt-DFT-s-OFDM with frequency-domain truncated spectrum shaping (zt-DFT-s-OFDM with FTSS) waveform, a zt-DFT-s-OFDM signal carrying real and imaginary part separation, a zt-DFT-s-OFDM signal carrying a pulse amplitude modulation constellation, a shaping filter-added zt-DFT-s-OFDM signal carrying real and imaginary part separation, a shaping filter-added zt-DFT-s-OFDM signal carrying a PAM constellation, or the like.

DFT-s-OFDM is a single carrier waveform technology based on an OFDM implementation architecture. Compared with the OFDM waveform, a DFT-s-OFDM waveform provides higher output power and higher power amplification efficiency at a same power amplification level, so that coverage can be improved and energy consumption can be reduced.

Currently, in a long-term evolution (long-term evolution, LTE) system and a 5th generation (5th generation, 5G) (or referred to as new radio (new radio, NR)) communication system, the DFT-s-OFDM waveform may be applied to uplink transmission. However, in high-frequency communication, the PAPR problem is serious due to a limited device capacity. Therefore, the DFT-s-OFDM waveform may also be applied to downlink transmission in the future. A frequency band for high frequency communication may be 24250 MHz to 52600 MHz in the NR system, may be a frequency band higher than 52600 MHz supported by a subsequently evolved NR system, or may be a higher frequency band, for example, a terahertz (THz) frequency band, in a next-generation communication system.

The DFT-s-OFDM technology has discrete Fourier transform (discrete Fourier transform, DFT) processing before OFDM processing. Therefore, the DFT-s-OFDM technology may also be referred to as a linear precoding OFDM technology.

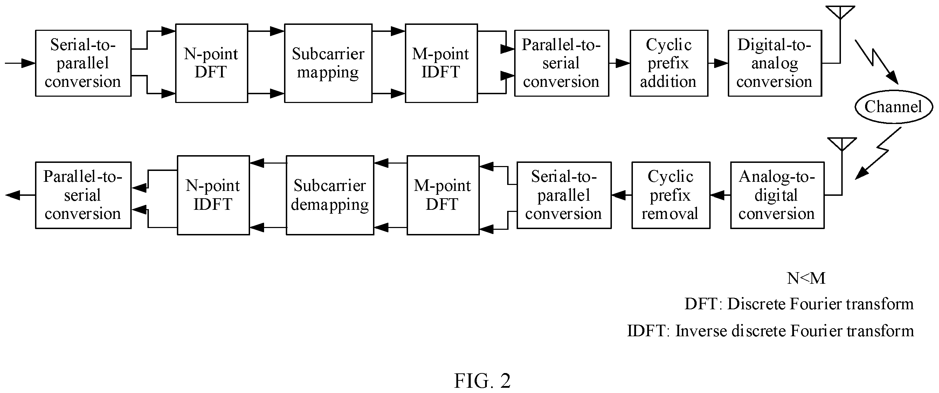

FIG. 2 is a schematic flowchart of processing of a DFT-s-OFDM technology according to an embodiment of this application. A transmit end sequentially performs the following processing on a time domain discrete sequence: serial-to-parallel (serial-to-parallel) conversion, N-point discrete Fourier transform (discrete Fourier transform, DFT), subcarrier mapping, M-point inverse discrete Fourier transform (inverse discrete Fourier transform, IDFT), parallel-to-serial (parallel-to-serial) conversion, cyclic prefix (cyclic prefix, CP) addition, and digital-to-analog conversion (digital-to-analog conversion, DAC) processing; and then sends a signal through an antenna port and a channel (channel). When receiving the signal through the channel and the antenna port, a receive end sequentially performs the following processing on the signal: analog-to-digital conversion (analog-to-digital conversion, ADC), cyclic prefix removal, serial-to-parallel (serial-to-parallel) conversion, M-point DFT, subcarrier demapping, N-point IDFT, and parallel-to-serial (parallel-to-serial) conversion, to obtain the time domain discrete sequence.

The transmit end can obtain a frequency domain sequence of the time domain discrete sequence through N-point DFT. After subcarrier mapping is performed on the frequency domain sequence, IDFT is input to perform M-point IDFT, where N < M. Because a length of the IDFT is greater than a length of the DFT, a part that is in the IDFT and by which the length of the IDFT exceeds the length of the DFT is filled with zeros when being input. After IDFT is performed, the cyclic prefix is added to avoid symbol interference.

The essence of DFT-s-OFDM is still the single carrier. In physical essence, a DFT-mapping-IFFT operation is equivalent to performing convolution on a signal input before the DFT and a sine waveform. Because the DFT-s-OFDM is still a single carrier in essence, compared with the OFDM, the DFT-s-OFDM has a lower PAPR, which can improve the power transmission efficiency of the mobile terminal, prolong the battery use time, and reduce the terminal costs.

(3) Single carrier-quadrature amplitude modulation (single carrier-quadrature amplitude modulation, SC-QAM)

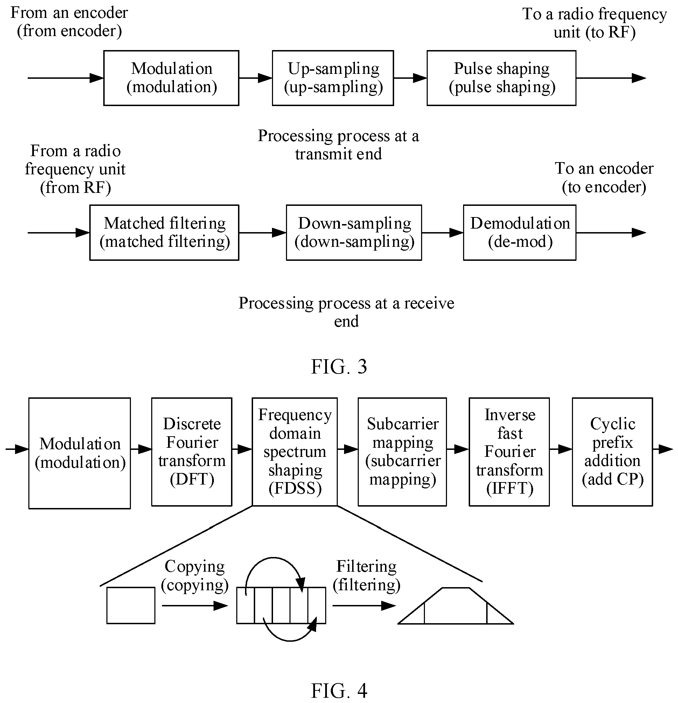

SC-QAM is a common single carrier waveform scheme, and is widely used in 2G and Wi-Fi communication systems. For processing procedures at a transmit end and a receive end of the SC-QAM, refer to FIG. 3. Specifically, for the transmit end, a communication signal is obtained from an encoder (encoder), and after modulation (modulation), up-sampling (up-sampling), and pulse shaping (pulse shaping) are sequentially performed on the communication signal, the signal is sent through a radio frequency (radio frequency, RF) unit. For the receive end, a communication signal is obtained from a radio frequency unit, and after matched filtering (matched filtering), down-sampling (down-sampling), and demodulation (de-mod) are sequentially performed on the communication signal, the signal is sent to an encoder (encoder) for processing. It can be seen that sending and receiving of the SC-QAM are both completed in time domain, and time-frequency domain transformation is not included. Therefore, there is no fast Fourier transform (fast Fourier transform, FFT)/inverse fast Fourier transform (inverse fast Fourier transform, IFFT) process, and only time domain matched filtering, up-sampling, and down-sampling are required. Therefore, compared with a multi-carrier system, the SC-QAM has advantages of low complexity and a low PAPR.

As mentioned above, a DFT-mapping-IFFT operation is equivalent to performing convolution on a signal input before the DFT and a sine waveform. However, from the perspective of time domain shaping (pulse shaping of the SC-QAM), it is difficult to form a sine waveform, that is, it is difficult to form a strict rectangular filter as a frequency domain filter of the SC-QAM. Generally, a pulse shaping filter of the SC-QAM is usually an RRC filter, which has a specific roll-off factor. Therefore, the SC-QAM is generally equivalent to orthogonal frequency division multiplexing with frequency domain spectrum forming (discrete Fourier transform spread orthogonal frequency division multiplexing with frequency domain spectrum shaping, DFT-s-OFDM with FDSS).

(4) Orthogonal frequency division multiplexing with frequency domain spectrum shaping (discrete Fourier transform spread orthogonal frequency division multiplexing with frequency domain spectrum shaping, DFT-s-OFDM with FDSS)

The DFT-s-OFDM with FDSS waveform is a special DFT-s-OFDM waveform. Compared with the DFT-s-OFDM waveform, a frequency domain spectrum shaping operation is added to the DFT-s-OFDM with FDSS technology.

FIG. 4 is a schematic flowchart of processing of a DFT-s-OFDM with FDSS technology according to an embodiment of this application; A transmit end sequentially performs operations. such as discrete Fourier transform (discrete Fourier transform, DFT), frequency domain spectrum shaping (frequency domain spectrum shaping, FDSS), subcarrier mapping (subcarrier mapping), inverse fast Fourier transform (inverse fast Fourier transform, IFFT), and cyclic prefix (cyclic prefix, CP) addition, on the modulated (modulated) signal.

In this process, it can be learned that, in the DFT-s-OFDM with FDSS technology, an extra spectrum replication is performed after the DFT, and then a filter is used to process the signal obtained after the replication, to achieve the effect of frequency domain spectrum shaping. The specific content is to copy a part of the spectrum to another side, and then add a frequency domain filter to perform spectrum shaping. The frequency domain filter is the same as an equivalent filter obtained after a Fourier transform is performed on a filter for pulse shaping in a block diagram of an SC-QAM transmitter. Therefore, the SC-QAM is equivalent to the DFT-s-OFDM with frequency domain spectrum shaping. Because frequency domain spectrum shaping is performed, it is equivalent to that a waveform in time domain changes from a DFT-s-OFDM sinc waveform to another waveform with a more limited time length/a lower sideband envelope, to further reduce the PAPR of the DFT-s-OFDM waveform.

(5) Single carrier-offset quadrature amplitude modulation ((Single carrier-Offset quadrature amplitude modulation, SC-OQAM)/Orthogonal frequency division multiplexing (discrete Fourier transform spread orthogonal frequency division multiplexing, DFT-s-OFDM with FTSS) waveform extended by using a single carrier-based transform

The SC-OQAM is changed and derived from the SC-QAM. Compared with the SC-QAM, the SC-OQAM may further reduce the PAPR. Similar to the SC-QAM and the DFT-s-OFDM with FDSS, the SC-OQAM also has an equivalent implementation in frequency domain, that is, DFT-s-OFDM with frequency-domain truncated spectrum shaping (FTSS). Therefore, the SC-OQAM and the equivalent implementation DFT-s-OFDM with FTSS of the SC-OQAM are described again from a perspective similar to the implementation of DFT-s-OFDM. This is because to facilitate resource allocation, scheduling, and the like in frequency domain, it is more likely that a waveform is defined from a perspective of frequency domain implementation. However, in essence, the two implementations are equivalent, both can reduce the PAPR of the DFT-s-OFDM waveform, and are alternative waveform technologies in future mobile communication (6G+) and high-frequency scenarios.

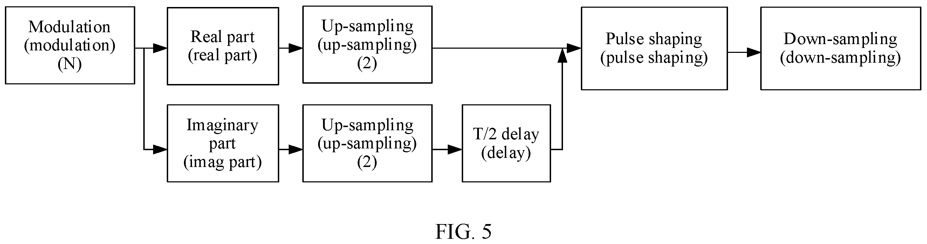

FIG. 5 is a block diagram of implementation at a transmit end of SC-OQAM according to an embodiment of this application; Compared with the implementation of the SC-QAM, the SC-OQAM separates a real part and an imaginary part of a complex modulated signal, and then performs a T/2 delay (T/2 delay) on one signal (an imaginary part (imag part) shown in FIG. 5). Other implementation processes are similar to that of the SC-QAM.

The differences between the implementations of the foregoing two waveforms are analyzed from a perspective of waveforms.

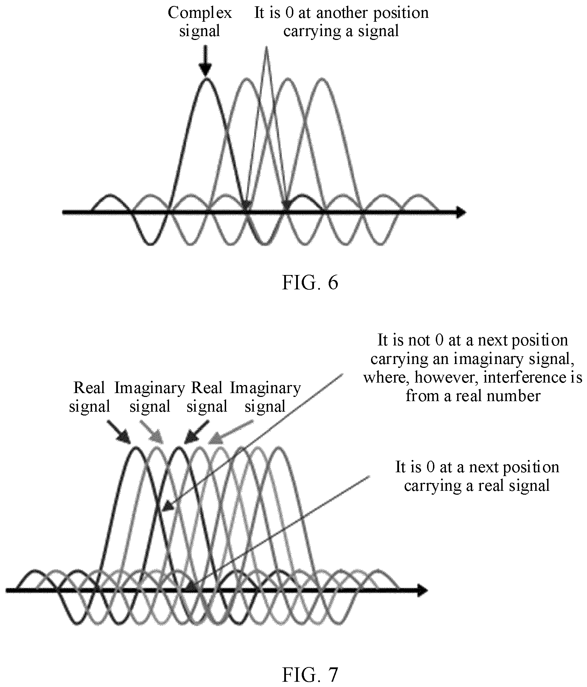

The SC-QAM waveform carries a complex signal (a quadrature amplitude modulation (quadrature amplitude modulation, QAM) signal, or the like), and a root-raised cosine (root-raised cosine, RRC) filter is used as an example of a waveform. FIG. 6 is a schematic diagram of an SC-QAM waveform according to an embodiment of this application. In FIG. 6, one SC-QAM waveform carries one complex signal. Because this waveform and a next waveform carrying a signal are in an orthogonal relationship (or referred to as a complex orthogonal relationship). That is, the SC-QAM waveform is 0 at a sampling position of the signal carried by the next SC-QAM waveform. Therefore, there is no interference between the two SC-QAM waveforms.

For SC-OQAM, because a real part and an imaginary part of a signal are separated, two SC-OQAM waveforms are not in a complex orthogonal relationship, but a partial orthogonal relationship between a real part and an imaginary part. FIG. 7 is a schematic diagram of an SC-OQAM waveform according to an embodiment of this application; In FIG. 7, an SC-OQAM waveform carries a signal with real part and an imaginary part separated. For example, a real-part SC-OQAM waveform is not 0 at a sampling position of a signal carried by a next imaginary-part SC-QAM waveform and is 0 at a sampling position of a signal carried by a next real-part SC-OQAM waveform. Therefore, there is interference between the real-part SC-OQAM waveform and the imaginary-part SC-OQAM waveform. However, because information carried in the next imaginary-part SC-QAM waveform is orthogonal to information carried in the real-part SC-OQAM waveform, the interference is orthogonal to the signal. It may be understood that the real-part SC-OQAM waveform is orthogonal to the next imaginary-part SC-QAM waveform and the next real-part SC-OQAM waveform. The foregoing case may be referred to as a partial orthogonal relationship between a real part and an imaginary part. In addition, due to the partial orthogonal relationship between the real part and the imaginary part, a receive end discards an imaginary part when receiving a real signal, and discards a real part when receiving an imaginary part signal, so that information can be correctly restored. An advantage of orthogonality between a real part and an imaginary part lies in that a wave peak of a real-part waveform is superimposed on a non-wave peak of an imaginary part signal, and this method for staggering wave peaks can effectively reduce the PAPR.

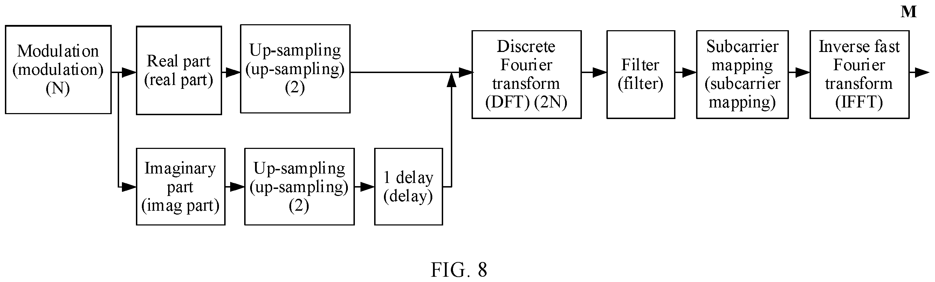

FIG. 8 is a schematic flowchart of processing of a DFT-s-OFDM with FTSS technology according to an embodiment of this application; A transmit end splits a quadrature amplitude modulation (quadrature amplitude modulation, QAM) constellation point used in a DFT-s-OFDM system into a real part and an imaginary part (or it may be directly defined) that a phase amplitude modulation (phase amplitude modulation, PAM) signal instead of a QAM signal is input). After this change is made, double up-sampling is performed, that is, a real part signal becomes [X, 0, X, 0, X, 0, ...], and an imaginary part signal becomes [jY, 0, jY, 0, jY, 0, ...]. Then, the imaginary part signal is delayed, and the imaginary part signal becomes [0, jY, 0, jY, 0, jY, ...], so that the signal becomes [X, jY, X, jY, X, jY, ...] after combination, but a total length of the signal is twice that of the original complex modulated signal. Then, a 2N-point discrete Fourier transform (Discrete Fourier Transform, DFT) is performed on a symbol obtained after phase rotation/real and imaginary part separation.

Then, frequency-domain truncated spectrum shaping (frequency-domain truncated spectrum shaping, FTSS) is performed on the DFT signal after 2M points. A specific manner is as follows:

(1) For a downlink transmission direction, the terminal device receives a transmission resource and an FTSS parameter, including one or more of a resource bandwidth, a center frequency, a modulation scheme, an original signal bandwidth, a filter type, and a filter parameter, that are configured/indicated by the network device. The resource bandwidth is a bandwidth of a signal received by the terminal device and the center frequency.
(2) The terminal device performs frequency domain filtering based on the indicated signal bandwidth and the filter parameter. For a filtering manner, refer to the schematic diagram shown in FIG. 4.

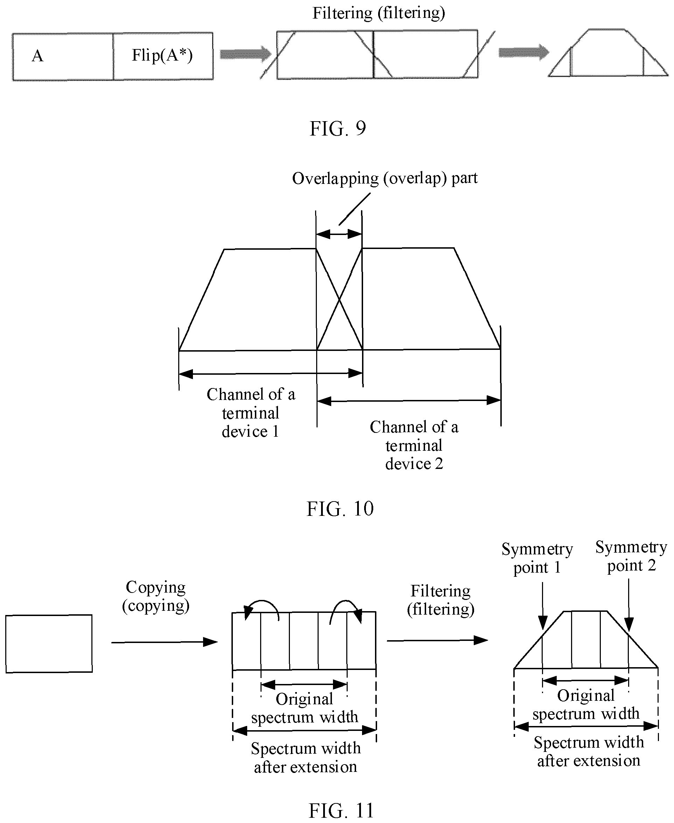

Because the QAM constellation modulation has a real part and an imaginary part separated, a length of the signal is twice that of a conventional QAM constellation modulation, and a DFT size is also twice a DFT size of the QAM constellation modulation. A signal after the DFT has a characteristic, that is, a spectrum has a conjugate symmetry characteristic: $s[n] = s^*[N - n]$, that is, A and Flip(A*) shown in FIG. 9. Therefore, data after the DFT is redundant. Therefore, truncated frequency domain filtering may be performed on a redundant signal one time. The truncation means that a bandwidth of a filter is less than a bandwidth after the DFT. For example, a bandwidth after the DFT is 100 RBs, and a length of the frequency domain filter may be designed as 60 RBs. A filtering process is that the frequency domain filter is directly multiplied by the signal after the DFT. Because the signal is redundant, the truncated filtering does not cause performance loss. Finally, after an inverse fast Fourier transform (IFFT) is performed, CP addition and sending are performed.

In conclusion, the SC-OQAM or the DFT-s-OFDM with FTSS is essentially to separate the real part from the imaginary part, and then perform processing through a shaping filter. This manner of separating the real part from the imaginary part can reduce the PAPR of the signal.

It can be learned from the foregoing description about the SC-OQAM waveform that, from a perspective of the frequency domain, the SC-OQAM needs to occupy a part of extra bandwidth to ensure spectrum shaping without performance loss. In other words, the PAPR needs to be reduced at the cost of using more system bandwidth. Therefore, to reduce a loss of system bandwidth, a solution is provided. For different terminal devices, a channel overlapping (Overlap) method is used to multiplex excessive bandwidth.

FIG. 10 is a schematic diagram of channel overlapping according to an embodiment of this application. There is an overlapping part between a channel of the terminal device 1 and a channel of the terminal device 2. The terminal device 1 and the terminal device 2 jointly use the bandwidth of the overlapping part, thereby improving the spectrum utilization efficiency of the system. From a perspective of a base station, the base station obtains channels of a UE 1 and a UE 2 in an overlapping part through channel estimation. It may be considered that a signal in the overlapping part is from two antennas (in an MU case), and the base station performs combined reception of the two antennas, to separately demodulate information from the terminal device 1 and the terminal device 2.

In this solution, the two terminal devices multiplex a same bandwidth position (that is, an overlapping part) by using an overlapping method, and information from the terminal device 1 and the terminal device 2 may be separately demodulated at the receive end. However, because data of the terminal device 1 and data of the terminal device 2 that are sent on the overlapping part affect each other, demodulation performance of each terminal device is affected to some extent. In other words, this solution can improve the spectrum utilization efficiency of the system, but degrades the demodulation performance of the system.

Based on the network architecture, the terminal device, and the access network device described in the foregoing descriptions, the following describes a method for determining phase noise provided in embodiments of this application. In embodiments of this application, special precoding is performed on signals corresponding to two terminal devices sharing a frequency resource on the frequency resource. Such precoding can improve channel conditions of the terminal devices on the frequency resource, reduce interference between signals sent by the two terminal devices, and improve receiving performance of the terminal devices on the frequency resource.

First, a design principle of precoding, by terminal devices, signals corresponding to an overlapping frequency domain resource is described.

A DFT-s-FDM with FTSS signal or an SC-OQAM signal is a time-domain signal with a real part and an imaginary part separated. It can be learned from the foregoing description that a spectrum of such a signal has a conjugate symmetry characteristic. FIG. 11 is a flowchart of signal processing according to an embodiment of this application. Signals along symmetry points meet the following formula 1-1:

$$s[n] = s^*[N - n], \text{where} \qquad \text{Formula 1-1}$$

$n$ is a subcarrier index, and N is a total quantity of subcarriers.

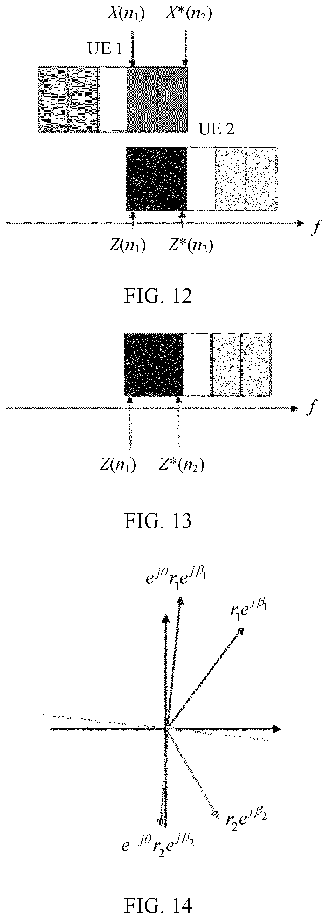

Descriptions are provided below by using an example in which there is an overlapping part between channels of a terminal device 1 (for example, a UE 1) and a terminal device 2 (for example, a UE 2). FIG. 12 is a schematic diagram of a channel according to an embodiment of this application; In this example, both the two terminal devices use time-domain signals with a real part and an imaginary part separated, and both have a conjugate symmetry characteristic in frequency domain. It should be noted that the conjugate symmetry characteristic is embodied in a signal before a filter is added. After the signal is multiplied by the filter, due to different filter coefficients, the signal is not completely conjugate symmetric. However, because the filter is usually a purely real part and does not affect formula derivation, impact of the filter may be omitted.

In FIG. 12, $n_1$ represents a position 1 of a subcarrier, and $n_2$ represents a position 2 of a subcarrier. X($n$) represents a frequency-domain signal of the terminal device 1, and Z($n$) represents a frequency-domain signal of the terminal device 2. It can be learned from the conjugate symmetry of the signal that X($n_1$) and X($n_2$) are conjugate to each other, Z($n_1$) and Z($n_2$) are conjugate to each other, and $n_1$ and $n_2$ are symmetric with respect to a central symmetry point. Each UE has two central symmetry points, and the central symmetry points may be represented by a formula 1-2.

$$\{N/4, 3N/4\}, \text{where} \qquad \text{Formula 1-2}$$

a conjugate symmetry relationship corresponding to a signal whose index is less than N/2 may be represented as $s[n] = s^*\left[\frac{N}{4} - n\right]$, and a conjugate symmetry relationship for a signal whose index is greater than N/2 or equal to N/2 may be represented as $s[n] = s^*\left[\frac{3N}{4} - n\right]$.

If the UE 1 and the UE 2 send communication signals to a receive end (for example, a base station) in a manner shown in FIG. 12, to obtain optimal receiver performance, the receive end usually performs combined reception.

First, a simple case of combined reception of a single UE is described. FIG. 13 is a schematic diagram of another channel according to an embodiment of this application. A relationship between a sent signal and a received signal may be shown in a formula 1-3:

$$\begin{bmatrix} Y_1(n_1) \\ Y_1(n_2) \end{bmatrix} = \begin{bmatrix} H_1(n_1) \\ H_1^*(n_2) \end{bmatrix} Z, \text{where} \qquad \text{Formula 1-3}$$

$n_1$ represents a position 1 of a subcarrier, and $n_2$ represents a position 2 of a subcarrier. $Y_1(n_1)$ is a signal received at the position 1 of the subcarrier, $Y_1(n_2)$ is a signal received at the position 2 of the subcarrier, $H_1(n_1)$ is an equivalent channel corresponding to the position 1 of the subcarrier, and $H_1^*(n_2)$ is an equivalent channel corresponding to the position 2 of the subcarrier. Z is a sent signal at the position 1 and the position 2 of the subcarriers. Estimation of the sent signal may be expressed as a formula 1-4:

$$\hat{Z} = \frac{\mathbf{H}^H \mathbf{Y}}{\mathbf{H}^H \mathbf{H} + \delta^2}, \text{ where} \qquad \text{Formula 1-4}$$

$$\mathbf{H} = \begin{bmatrix} H_1(n_1) \\ H_1^*(n_2) \end{bmatrix}, \quad \mathbf{Y} = \begin{bmatrix} Y_1(n_1) \\ Y_1(n_2) \end{bmatrix},$$

and $\delta$ is a variance of additive white Gaussian noise (additive white Gaussian noise, AWGN).

Similarly, for two UEs having an overlapping channel, for an expression of a received signal, refer to a formula 1-5:

$$\begin{bmatrix} Y(n_1) \\ Y(n_2) \end{bmatrix} = \begin{bmatrix} H_1(n_1) & H_2(n_1) \\ H_1^*(n_2) & H_2^*(n_2) \end{bmatrix} \begin{bmatrix} X \\ Z \end{bmatrix}, \text{ where} \qquad \text{Formula 1-5}$$

X is a sent signal corresponding to the UE 1, and Z is a sent signal corresponding to the UE 2.

Combined reception is performed on overlapping signals of the UE 1 and the UE 2. For a sent signal, refer to a formula 1-6:

$$\begin{bmatrix} \hat{X} \\ \hat{Z} \end{bmatrix} = \frac{\mathbf{H}^H \mathbf{Y}}{\mathbf{H}^H \mathbf{H} + \delta^2}, \text{ where} \qquad \text{Formula 1-6}$$

$\hat{X}$ is an estimated sent signal corresponding to the UE 1, and $\hat{Z}$ is an estimated sent signal corresponding to the UE 2.

In this embodiment of this application, to reduce channel correlation between equivalent channels of the two UEs on an overlapping frequency domain resource (that is, a first frequency domain resource), phase precoding may be performed on signals of the UE 1 and the UE 2 on the first frequency domain resource, to change phases of the signals. It is assumed that a mode of precoding subcarriers $[n_1, n_2]$ of the UE 1 and the UE 2 is shown in a formula 1 to 7:

$$\begin{aligned} UE_1 &: \left[ e^{j\theta_1}, e^{j\theta_2} \right] \\ UE_2 &: \left[ e^{j\theta_3}, e^{j\theta_4} \right] \end{aligned} . \qquad \text{Formula 1-7}$$

In particular, if same precoding is used on the subcarriers $[n_1, n_2]$, the PAPR may not deteriorate, and this is an optimal choice in a lossless performance case. In this case, a mode of precoding the subcarriers $[n_1, n_2]$ of the UE 1 and the UE 2 may be shown in a formula 1-8:

$$\begin{aligned} UE_1 &: \left[ 1, 1 \right] \\ UE_2 &: \left[ e^{j\theta}, e^{j\theta} \right] \end{aligned} . \qquad \text{Formula 1-8}$$

For another possible expression manner, refer to a formula 1-9:

$$\begin{bmatrix} e^{j\theta_0} \\ e^{j\theta_0+\theta} \end{bmatrix}. \qquad \text{Formula 1-9}$$

In this case, considering that same precoding is used on the subcarriers $[n_1, n_2]$, with reference to the formula 1-5 and the formula 1-8, an expression of performing combined reception on the overlapping signals may be shown in a formula 1-10:

$$\begin{bmatrix} Y(n_1) \\ Y(n_2) \end{bmatrix} = \begin{bmatrix} H_1(n_1) & e^{j\theta} H_2(n_1) \\ H_1^*(n_2) & e^{-j\theta} H_2^*(n_2) \end{bmatrix} \begin{bmatrix} X \\ Z \end{bmatrix}. \qquad \text{Formula 1-10}$$

This is because the equivalent channel of the signal $Z$ becomes $e^{-j\theta} H_2^*(n_2)$ , and therefore, is multiplied by a phase opposite to that of the equivalent channel of the signal $X$ in phase.

Based on the formula 1-10, correlation between two channels on which the UE 1 and the UE 2 independently send data may be obtained. Refer to a formula 1-11:

$$\begin{aligned} corr &= (\mathbf{H}_1)^H \mathbf{H}_2 \\ &= e^{j\theta} H_1^*(n_1) H_2(n_1) + e^{-j\theta} H_1(n_2) H_2^*(n_2). \qquad \text{Formula 1-11} \\ &= e^{j\theta} r_1 e^{j\beta_1} + e^{-j\theta} r_2 e^{j\beta_2} \end{aligned}$$

The formula 1-11 is solved, so that $\hat{\theta}$ may be solved to minimize the correlation between the two channels on which the UE 1 and the UE 2 independently send data, that is,

$$\hat{\theta} = \arg\min(|corr|). \qquad \text{Formula 1-12}$$

The minimum channel correlation is explained below through figures. FIG. 14 is a schematic diagram of another channel according to an embodiment of this application. In FIG. 14, it can be learned from the formula 1-11 that $H_1^*(n_1) H_2(n_1)$ may be represented as $r_1 e^{j\beta_1}$ (polarized representation), and $H_1(n_2) H_2^*(n_2)$ may be represented as $r_2 e^{j\beta_2}$ (polarized representation). After $r_1 e^{j\beta_1}$ is multiplied by $e^{j\theta}$, and $r_2 e^{j\beta_2}$ is multiplied by $e^{-j\theta}$ (that is, two vectors are multiplied by opposite phases respectively), the two vectors are opposite to each other. In this case, a length of a sum of the vectors is the shortest. In other words, it may be understood that the formula 1-12 has a solution.

More particularly, in consideration of a high-frequency application scenario, there is a high probability that the terminal device uses a line-of-sight (line of sight, LOS) transmission manner. Assuming that $n_1$ and $n_2$ pass through a same channel, for the UE: $H(n_1) = H(n_2)$.

In this case, for a channel correlation matrix between the UE 1 and the UE 2, refer to formula 1-13:

$$\begin{aligned} corr &= (\mathbf{H}_1)^H \mathbf{H}_2 \\ &= e^{j\theta} H_1^*(n_1) H_2(n_1) + e^{-j\theta} H_1(n_2) H_2^*(n_2) \\ &= e^{j\theta} H_1^* H_2 + e^{-j\theta} H_1 H_2^* \qquad \text{Formula 1-13} \\ &= r_1 e^{j\theta} e^{j\beta_1} + r_1 e^{-j\theta} e^{-j\beta_1} \\ &= r_1 \cos(\theta + \beta_1) \end{aligned}$$

$$\hat{\theta} = \frac{\pi}{2} - \beta_1$$

If *corr* is set to 0, it can be solved that:

Therefore, for LOS transmission, precoding between a plurality of users can ensure that channel correlation in an overlapping part is 0, so that transmission performance is optimal, and there is no loss in terms of PAPR.

For a general transmission scenario, for a mode of precoding subcarriers $[n_1, n_2]$ of the UE 1 and the UE 2, refer to formula 1-14:

$$UE_1 : \left[ e^{j\theta_1}, e^{j\theta_2} \right]$$
$$UE_2 : \left[ e^{j\theta_3}, e^{j\theta_4} \right]$$
Formula 1-14

According to the foregoing channel correlation calculation manner, a precoding matrix that minimizes channel correlation may also be solved, so that transmission performance of a system can be improved, but there are some losses in terms of PAPR.

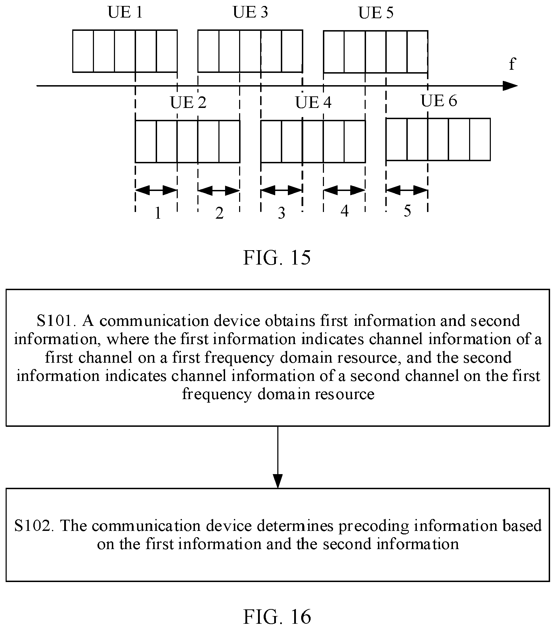

For a plurality of UEs, if every two UEs share (or referred to as multiplex) a segment of bandwidth (or referred to as a part of a frequency domain resource), each UE shares an overlapping transition band with at most two other UEs. Therefore, as extended to a plurality of UEs, for a final multiplexing scenario, refer to FIG. 15. For example, the UE 1 and the UE 2 share a bandwidth 1, and the UE 2 may calculate a coding mode of the UE 2 in the bandwidth 1 based on channel information of the UE 1 in the bandwidth 1 and channel information of the UE 2 in the bandwidth 1. The UE 2 and a UE 3 share a bandwidth 2, and the UE 3 may calculate a coding mode of the UE 3 in the bandwidth 2 based on channel information of the UE 2 in the bandwidth 2 and channel information of the UE 3 in the bandwidth 2. The UE 3 and a UE 4 share a bandwidth 3, and the UE 4 may calculate a coding mode of the UE 4 in the bandwidth 3 based on channel information of the UE 3 in the bandwidth 3 and channel information of the UE 4 in the bandwidth 3. The UE 4 and a UE 5 share a bandwidth 4, and the UE 5 may calculate a coding mode of the UE 5 in the bandwidth 4 based on channel information of the UE 4 in the bandwidth 4 and channel information of the UE 5 in the bandwidth 4. The UE 5 and a UE 6 share a bandwidth 5, and the UE 6 may calculate a coding mode of the UE 6 in the bandwidth 5 based on channel information of the UE 5 in the bandwidth 5 and channel information of the UE 6 in the bandwidth 4.

It can be learned that in consideration of a multi-UE scenario, except for that a UE in an edge sideband does not overlap with two UEs and overlaps with only one UE, all UEs in the middle overlap with other two UEs. Therefore, bandwidth utilization of the entire system only loses a part that is of the sideband and that is not overlapped by the UE, and the intermediate bandwidth is fully utilized.

FIG. 16 is a flowchart of a multi-user communication method according to an embodiment of this application. The method may be implemented based on the network architecture shown in FIG. 1. In an implementation, a first terminal may be the terminal device 1 in FIG. 1, and a second terminal may be the terminal device 2 in FIG. 1. A communication device may be the access network device in FIG. 1, may be the terminal device 1 (also referred to as the first terminal) in FIG. 1, or may be the terminal device 2 (also referred to as the second terminal) in FIG. 1. The method includes the following steps.

S101. The communication device obtains first information and second information.

The first information indicates channel information of a first channel on a first frequency domain resource, and the second information indicates channel information of a second channel on the first frequency domain resource. The first channel is a channel between the first terminal and the access network device, the second channel is a channel between the second terminal and the access network device, and the first channel and the second channel overlap with each other on the first frequency domain resource. In addition, phases of signals transmitted on symmetric subcarriers on the first channel are opposite, and phases of signals transmitted on symmetric subcarriers on the second channel are opposite. In a possible implementation, a signal transmitted on the first channel is conjugate symmetric, and a signal transmitted on the second channel is also conjugate symmetric. Optionally, the transmitted signal may be an SC-OQAM signal or a DFT-s-OFDM with FTSS signal. In another possible implementation, phases of signals transmitted on symmetric subcarriers on the first channel are opposite, and the signals transmitted on the symmetric subcarriers may be different by multiples in amplitude; and phases of signals transmitted on symmetric subcarriers on the second channel are opposite, and the signals transmitted on the symmetric subcarriers may be different by multiples in amplitude. For the symmetric subcarriers, refer to FIG. 12. For example, a subcarrier $n_1$ and a subcarrier $n_2$ are a pair of symmetric subcarriers.

For example, referring to FIG. 10, the first information indicates channel information of a channel of the terminal device 1 (that is, the first terminal) in an overlapping part (that is, the first frequency domain resource), and the second information indicates channel information of a channel of the terminal device 2 (that is, the second terminal) in the overlapping part (that is, the first frequency domain resource).

The communication device may be the access network device, the first terminal, or the second terminal. This is not limited in this embodiment of this application. It should be noted that, for the foregoing several cases, manners in which the communication device obtains the first information and the second information are different. The obtaining methods in different cases are further described below, and details are not described herein. For a case in which the communication device is the first terminal or the second terminal, descriptions are provided below by using an example in which the communication device is the first terminal. For a case in which the communication device is the second terminal, a similar solution is used, and details are not described again.

S102. The communication device determines phase precoding information based on the first information and the second information.

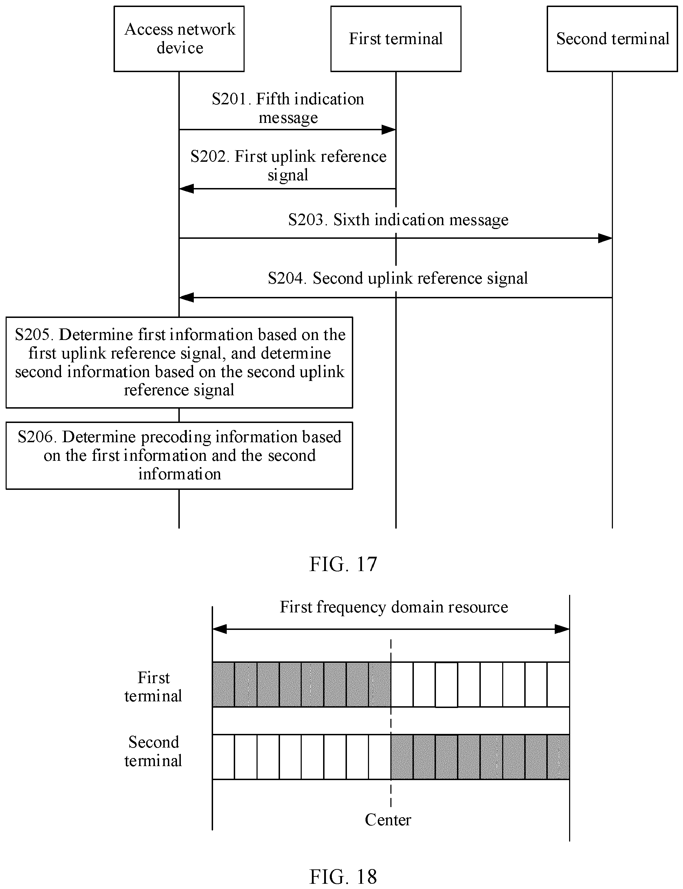

In an embodiment, this embodiment of this application is applied to an uplink transmission scenario. The communication device is the access network device. The access network device obtains the first information and the second information, further determines the phase precoding information based on the first information and the second information, and then notifies the first terminal and/or the second terminal of the phase precoding information, to enable the first terminal and/or the second terminal to process an uplink communication signal based on the phase precoding information. For this embodiment, refer to the description about the method embodiment shown in FIG. 17.

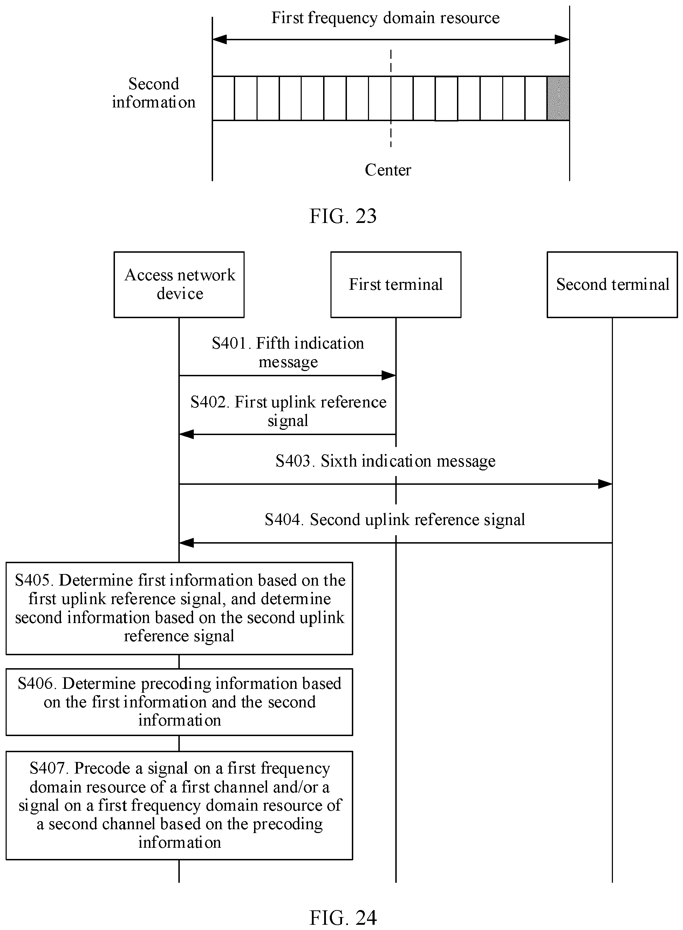

In another embodiment, this embodiment of this application is applied to an uplink transmission scenario. The communication device is the first terminal (or may be the second terminal, where the first terminal is used as an example for description). The first terminal obtains the first information and the second information, further determines the phase precoding information based on the first information and the second information, and then notifies the second terminal of the phase precoding information, to enable the second terminal to process an uplink communication signal based on the phase precoding information; and/or enable the first terminal to process the uplink communication signal based on the phase precoding information. For this embodiment, refer to the description about the method embodiment shown in FIG. 23.

In another embodiment, this embodiment of this application is applied to a downlink transmission scenario. The communication device is the access network device. The access network device obtains the first information and the second information, further determines the phase precoding information based on the first information and the second information, and then the access network device processes a downlink communication signal by using the phase precoding information. For this embodiment, refer to the description about the method embodiment shown in FIG. 24.

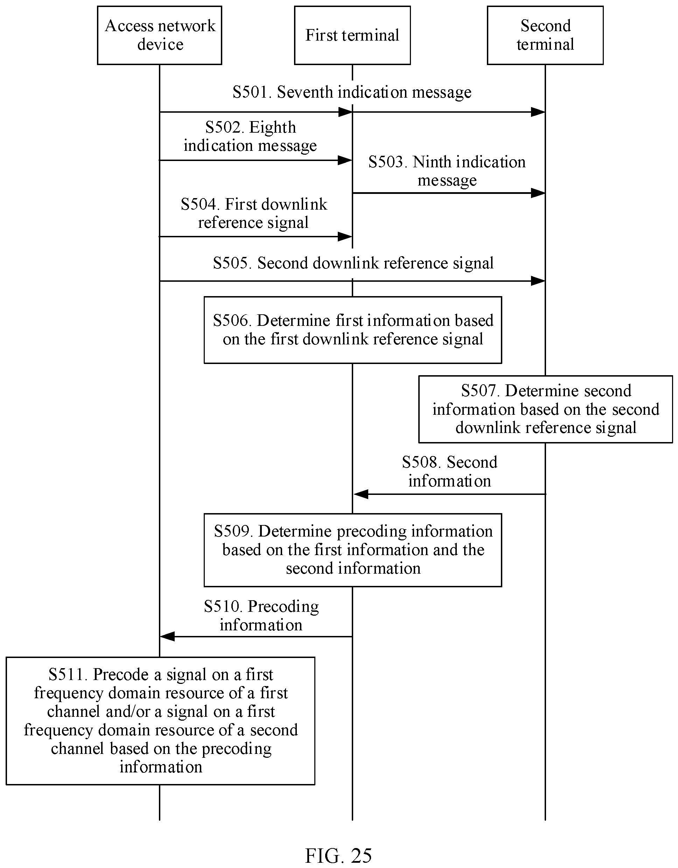

In another embodiment, this embodiment of this application is applied to a downlink transmission scenario. The communication device is the first terminal (or may be the second terminal, where the first terminal is used as an example for description). The first terminal obtains the first information and the second information, determines the phase precoding information based on the first information and the second information, and then notifies the access network device of the phase precoding information, to enable the access network device to process a downlink communication signal based on the phase precoding information. For this embodiment, refer to the description about the method embodiment shown in FIG. 25.

It should be noted that, for a manner in which the communication device determines the phase precoding information based on the first information and the second information, refer to the content of the principle part described above. For example, refer to formula 1-11 to formula 1-13. In this embodiment of this application, after precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

FIG. 17 is a flowchart of another multi-user communication method according to an embodiment of this application. This embodiment is applied to an uplink transmission scenario, and the communication device is the access network device. In this embodiment, the access network device obtains the first information and the second information. The access network device obtains the first information and the second information, further determines the phase precoding information based on the first information and the second information, and then notifies the first terminal and/or the second terminal, to enable the first terminal and/or the second terminal to process an uplink communication signal based on the phase precoding information. The method includes the following steps. Implementations of step S201 to step S205 may be considered as a specific implementation of step S101.

S201. The access network device (that is, a communication device) sends a fifth indication message to the first terminal, where the fifth indication message indicates the first terminal to send a first uplink reference signal to the access network device.

The first uplink reference signal is for the access network device to estimate channel information of the first terminal on a first frequency domain resource. For example, the first uplink reference signal may be a sounding reference signal (sounding reference signal, SRS), an uplink demodulation reference signal (Uplink de-modulation reference signal, Uplink DMRS), or the like.

In a possible implementation, the fifth indication message indicates the first terminal to send the first uplink reference signal to the access network device on a first channel. The first channel is a channel between the first terminal and the access network device. In this manner, the access network device may estimate channel information of the first channel based on the first uplink reference signal sent on the first channel. Because the first frequency domain resource is a frequency domain resource of the first channel, the access network device may determine the channel information of the first terminal on the first frequency domain resource from the channel information of the first channel.

In another possible implementation, the fifth indication message indicates the first terminal to send the first uplink reference signal to the access network device on the first frequency domain resource. In this manner, the access network device may estimate channel information of the first terminal on the first frequency domain resource based on the first uplink reference signal sent on the first frequency domain resource. In this manner, the first terminal does not need to send the uplink reference signal on the entire first channel, so that signaling overheads of the first terminal can be reduced.

In another possible implementation, because phases of signals transmitted on symmetric subcarriers on the first channel are opposite, and amplitudes of the signals transmitted on the symmetric subcarriers are in a multiple relationship (or may be equal), channel information corresponding to the other subcarrier may be deduced based on channel information corresponding to one subcarrier in the pair of symmetric subcarriers. For example, a signal transmitted on the first channel is an SC-OQAM signal or a DFT-s-OFDM with FTSS signal. For details, refer to descriptions in the foregoing descriptions. In this case, the fifth indication message indicates the first terminal to send the first uplink reference signal to the access network device on a second frequency domain resource, where the second frequency domain resource is a first half or a second half of the first frequency domain resource. In this manner, the access network device may estimate channel information on the second frequency domain resource based on the first uplink reference signal sent on the second frequency domain resource. In addition, due to symmetry of the subcarriers, the access network device may deduce, based on the second frequency domain resource, channel information on the other half frequency domain resource in the first frequency domain resource other than the second frequency domain resource, to determine the channel information of the first terminal on the first frequency domain resource. In this manner, the first terminal does not need to send the uplink reference signal on the entire first channel (or the entire first frequency domain resource), so that signaling overheads of the first terminal can be reduced.

In another possible implementation, the first channel is a line-of-sight (line of sight, LOS) channel, and the fifth indication message indicates the first terminal to send the first uplink reference signal to the communication device on one subcarrier (which may be any subcarrier) on the first frequency domain resource. Due to a characteristic of the LOS channel, channels of the first terminal on all subcarriers are the same or approximately the same. Therefore, in this case, the access network device may estimate, based on the first uplink reference signal sent on one subcarrier on the first frequency domain resource, channel information corresponding to the one subcarrier, so that the access network device can determine channel information of the first terminal on the first frequency domain resource.

S202. After the first terminal receives the fifth indication message from the access network device, the first terminal sends the first uplink reference signal to the access network device based on the fifth indication message.

Specifically, the first terminal sends the first uplink reference signal to the access network device in a manner of sending the first uplink reference signal that is indicated by the fifth indication message.

S203. The access network device sends a sixth indication message to the second terminal, where the sixth indication message indicates the second terminal to send a second uplink reference signal to the access network device.

The second uplink reference signal is for the access network device to estimate channel information of the second terminal on the first frequency domain resource. For example, the second uplink reference signal may be a sounding reference signal (sounding reference signal, SRS), an uplink demodulation reference signal (Uplink de-modulation reference signal, Uplink DMRS), or the like.

In a possible implementation, the sixth indication message indicates the second terminal to send the second uplink reference signal to the access network device on a second channel. The second channel is a channel between the second terminal and the access network device. In this manner, the access network device may estimate channel information of the second channel based on the second uplink reference signal sent on the second channel. Because the first frequency domain resource is a frequency domain resource of the second channel, the access network device may determine channel information of the second terminal on the first frequency domain resource from the channel information of the second channel.

In another possible implementation, the sixth indication message indicates the second terminal to send the second uplink reference signal to the communication device on the first frequency domain resource. In this manner, the access network device may estimate channel information of the second terminal on the first frequency domain resource based on the second uplink reference signal sent on the first frequency domain resource. In this manner, the second terminal does not need to send the uplink reference signal on the entire first channel, so that signaling overheads of the second terminal can be reduced.

For the foregoing two cases, because the first channel and the second channel have an overlapping first frequency domain resource, mutual interference between the first uplink reference signal and the second uplink reference signal needs to be avoided. Optionally, a sending time of the first uplink reference signal is different from a sending time of the second uplink reference signal. Optionally, a sending time of the first uplink reference signal is the same as a sending time of the second uplink reference signal, and the first uplink reference signal and the second uplink reference signal are orthogonal signals. In this manner, mutual interference between the first uplink reference signal and the second uplink reference signal can be avoided.

In another possible implementation, because phases of signals transmitted on symmetric subcarriers on the second channel are opposite, and amplitudes of the signals transmitted on the symmetric subcarriers are in a multiple relationship (or may be equal), channel information corresponding to the other subcarrier may be deduced based on channel information corresponding to one subcarrier in the pair of symmetric subcarriers. For example, a signal transmitted on the second channel is an SC-OQAM signal or a DFT-s-OFDM with FTSS signal. For details, refer to descriptions in the foregoing descriptions. In this case, the sixth indication message indicates the second terminal to send the second uplink reference signal to the access network device on a third frequency domain resource, where the third frequency domain resource is a first half or a second half of the first frequency domain resource. In this manner, the access network device may estimate channel information on the third frequency domain resource based on the second uplink reference signal sent on the third frequency domain resource. In addition, due to symmetry of the subcarriers, the access network device may deduce, based on the third frequency domain resource, channel information on the other half frequency domain resource in the first frequency domain resource other than the third frequency domain resource, to determine the channel information of the second terminal on the first frequency domain resource. In this manner, the second terminal does not need to send the uplink reference signal on the entire first channel (or the entire first frequency domain resource), so that signaling overheads of the second terminal can be reduced.

For example, FIG. 18 is a schematic diagram of a frequency domain resource for sending a first uplink reference signal and a second uplink signal according to an embodiment of this application. One grid represents one subcarrier, this schematic manner is also applicable to a similar diagram, and details are not described below again. The first terminal may send the first uplink reference signal on the first half (which may be understood as the second frequency domain resource) of the first frequency domain resource. The second terminal may send the second uplink reference signal on the second half (which may be understood as the third frequency domain resource) of the first frequency domain resource. In this manner, mutual interference between the first uplink reference signal and the second uplink reference signal can be avoided. The access network device may estimate channel information of the first terminal on the first frequency domain resource based on the first uplink reference signal sent on the second frequency domain resource, and estimate channel information of the second terminal on the first frequency domain resource based on the second uplink reference signal sent on the third frequency domain resource.

In another possible implementation, the fifth indication message indicates the first terminal to send the first uplink reference signal to the access network device on a fourth frequency domain resource. The fourth frequency domain resource is a first half or a second half of a first half of the first frequency domain resource, or a first half or a second half of a second half of the first frequency domain resource. The sixth indication message indicates the second terminal to send the first uplink reference signal to the access network device on a fifth frequency domain resource. The fifth frequency domain resource is a first half or a second half of a first half of the first frequency domain resource, or a first half or a second half of a second half of the first frequency domain resource. Specifically, the fourth frequency domain resource is different from the fifth frequency domain resource. In this way, due to symmetry of the subcarriers, the access network device may estimate channel information of one half part (which is referred to as a part A for ease of description) of the first terminal on the first frequency domain resource based on the first uplink reference signal sent on the fourth frequency domain resource, and estimate channel information of the other half part (which is referred to as a part B for ease of description) of the second terminal on the first frequency domain resource based on the second uplink reference signal sent on the fifth frequency domain resource. It may be understood that the part A and the part B jointly form the first frequency domain resource. Optionally, the access network device may consider that channel information of the first terminal in the part B of the first frequency domain resource is the same as channel information in the part A, and channel information of the second terminal in the part A of the first frequency domain resource is the same as channel information in the part B. Further, the access network device determines first information corresponding to the first terminal and second information corresponding to the second terminal.

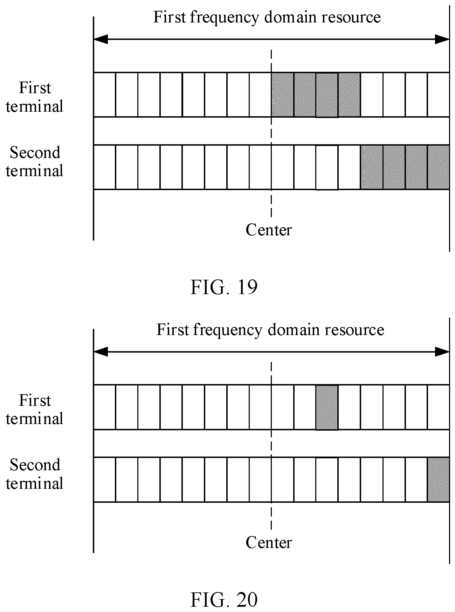

For example, FIG. 19 is a schematic diagram of another frequency domain resource for sending a first uplink reference signal and a second uplink signal according to an embodiment of this application. The first terminal may send the first uplink reference signal on the first half (which may be understood as the fourth frequency domain resource) of the second half of the first frequency domain resource. The second terminal may send the second uplink reference signal on the second half (which may be understood as the fifth frequency domain resource) of the second half of the first frequency domain resource.

In another possible implementation, the second channel is a line-of-sight (line of sight, LOS) channel, and the sixth indication message indicates the second terminal to send the second uplink reference signal to the communication device on one subcarrier (which may be any subcarrier) on the first frequency domain resource. Due to a characteristic of the LOS channel, channels of the second terminal on all subcarriers are the same or approximately the same. Therefore, in this case, the access network device may estimate, based on the second uplink reference signal sent on one subcarrier on the first frequency domain resource, channel information corresponding to the one subcarrier, so that the access network device can determine channel information of the second terminal on the first frequency domain resource.

For example, FIG. 20 is a schematic diagram of another frequency domain resource for sending a first uplink reference signal and a second uplink signal according to an embodiment of this application. The first terminal may send the first uplink reference signal on one subcarrier on the first frequency domain resource, and the second terminal may send the second uplink reference signal on one subcarrier on the first frequency domain resource. Optionally, the subcarrier corresponding to the first terminal and the subcarrier corresponding to the second terminal may be different subcarriers. In this way, interference between signals transmitted on the two subcarriers can be avoided. The access network device may estimate the channel information of the first terminal on the first frequency domain resource based on the first uplink reference signal sent on one subcarrier, and estimate the channel information of the second terminal on the first frequency domain resource based on the second uplink reference signal sent on one subcarrier.

Optionally, in this implementation, the access network device may predefine that if channel information at one subcarrier position fed back by the terminal device is received, all channel information of a channel is deduced based on the channel information at the one subcarrier position. In other words, receiving channel information at one subcarrier position is equivalent to receiving all channel information of a channel corresponding to the one subcarrier. Optionally, when the access network device measures that channel coefficients of the terminal device are the same or approximately the same (that is, the access network device knows a channel characteristic of the terminal device in advance), the access network device may indicate the terminal device to feed back channel information at only one subcarrier position.

S204. After the second terminal receives the sixth indication message from the access network device, the first terminal sends the second uplink reference signal to the access network device based on the sixth indication message.

Specifically, the second terminal sends the second uplink reference signal to the access network device in a manner of sending the second uplink reference signal that is indicated by the sixth indication message.

S205. After the access network device receives the first uplink reference signal sent by the first terminal and the second uplink reference signal sent by the second terminal, the access network device determines first information based on the first uplink reference signal, and determines second information based on the second uplink reference signal.

The first information indicates channel information of a first channel on a first frequency domain resource, and the second information indicates channel information of a second channel on the first frequency domain resource. For different manners of sending the first uplink reference signal and the second uplink reference signal, the access network device correspondingly has methods for determining the first message and the second message. For details, refer to descriptions about the content corresponding to step S201 and step S203.

S206. The access network device determines phase precoding information based on the first information and the second information.

It should be noted that, for that the access network device determines the phase precoding information based on the first information and the second information, refer to the content of the principle part described above. For example, refer to formula 1-11 to formula 1-13.

In a possible implementation, the phase precoding information is information used by the second terminal to precode a second signal. The second signal is a signal on the first frequency domain resource of the second channel. It should be noted that in this manner, the first terminal does not need to perform extra precoding processing on a signal on the first frequency domain resource of the first channel. The method further includes: The access network device sends a first indication message to the second terminal. The first indication message indicates the phase precoding information. After the second terminal receives the first indication message from the access network device, the second terminal may process, based on the phase precoding information, an uplink communication signal sent on the first frequency domain resource of the second channel. Optionally, the access network device may also send an indication message to the first terminal. The indication message indicates that phase precoding information corresponding to the first terminal is 1, that is, it is understood that the first terminal does not need to perform extra precoding processing.

In this manner, after the second terminal processes, based on the phase precoding information, the uplink communication signal sent on the first frequency domain resource of the second channel, channel correlation between an equivalent channel of the second channel on the first frequency domain resource and an equivalent channel of the first channel on the first frequency domain resource (in this case, an original channel of the first channel on the first frequency domain resource) is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

Optionally, the phase precoding information may also be information used by the first terminal to precode a first signal. The first signal is a signal on the first frequency domain resource of the first channel. In this manner, the second terminal does not need to perform extra precoding processing on a signal on the first frequency domain resource of the second channel. In other words, the phase precoding information may be phase precoding information for any one of the first terminal or the second terminal to process a sent signal. The method further includes: The access network device sends an indication message to the first terminal. The indication message indicates the phase precoding information. Optionally, the access network device may also send an indication message to the second terminal. The indication message indicates that phase precoding information corresponding to second terminal is 1, that is, it is understood that the second terminal does not need to perform extra precoding processing.

In another possible implementation, the phase precoding information includes first phase precoding information used by the first terminal to precode a first signal, where the first signal is a signal on the first frequency domain resource of the first channel; and second phase precoding information used by the second terminal to precode a second signal, where the second signal is a signal on the first frequency domain resource of the second channel. The method further includes: The access network device sends a second indication message to the first terminal. The second indication message indicates first phase precoding information. The access network device sends a third indication message to the second terminal. The third indication message indicates second phase precoding information.

In this manner, after the first terminal processes, based on the first phase precoding information, an uplink communication signal sent on the first frequency domain resource of the first channel, and the second terminal processes, based on the second phase precoding information, an uplink communication signal sent on the first frequency domain resource of the second channel, channel correlation between an equivalent channel of the second channel on the first frequency domain resource and an equivalent channel of the first channel on the first frequency domain resource is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

The foregoing describes a manner in which the access network device determines the phase precoding information required by the first terminal and/or the second terminal for processing a signal in an uplink transmission scenario. In this manner, a manner in which the access network device processes received signals sent by the first terminal and the second terminal is described below.

Step a1: The access network device receives a first signal sent by the first terminal through a first frequency domain resource of a first channel, and a second signal sent by the second terminal through the first frequency domain resource of a second channel.

Step a2: The access network device obtains, through channel estimation, channel information corresponding to the first frequency domain resource. For the channel information, refer to a formula 1-15:

$$\begin{bmatrix} H_1(n_1) \cdots H_1(n_2) \\ H_2(n_1) \cdots H_2(n_2) \end{bmatrix}, \text{ where} \qquad\qquad \text{Formula 1-15}$$

$H_1$ represents channel information of the UE 1, $H_2$ represents channel information of the UE 2, $n_1$ represents a subcarrier index $n_1$, and $n_2$ represents a subcarrier index $n_2$. It may also be understood that $n_1$ represents a position 1 of a subcarrier, and $n_2$ represents a position 2 of a subcarrier.

Step a3: The access network device performs multi-UE joint demodulation based on the first signal, the second signal, and the phase precoding information.

A demodulation algorithm is as follows:

For an expression of the received signal, refer to formula 1-16:

$$\begin{bmatrix} Y(n_1) \\ Y(n_2) \end{bmatrix} = \begin{bmatrix} H_1(n_1) & H_2(n_1) \\ H_1^*(n_2) & H_2^*(n_2) \end{bmatrix} \begin{bmatrix} X \\ Z \end{bmatrix}, \text{ where} \qquad\qquad \text{Formula 1-16}$$

$n_1$ represents a subcarrier index $n_1$, and $n_2$ represents a subcarrier index $n_2$. $Y(n_1)$ is a received signal corresponding to a subcarrier at $n_1$, and $Y(n_2)$ is a received signal corresponding to a subcarrier at $n_2$. $X$ is a sent signal corresponding to the subcarrier at $n_1$, and $Z$ is a sent signal corresponding to the subcarrier at $n_2$.

For combined reception of signals (which may also be referred to as overlapping signals) sent by the first terminal and the second terminal on the first frequency domain resource, refer to a formula 1-17:

$$\begin{bmatrix} \hat{X} \\ \hat{Z} \end{bmatrix} = \frac{H^H Y}{H^H H + \delta^2} .$$

Formula 1-17

For a mode in which first terminal and the second terminal precode subcarriers $[n_1, n_2]$ on the first frequency domain resource, refer to a formula 1-18:

$$\begin{bmatrix} e^{j\theta_0} \\ e^{j\theta_0 + \theta} \end{bmatrix} .$$

Formula 1-18

If same precoding is used on the subcarriers $[n_1, n_2]$, for a manner of performing combined receiving on the received signals on the first frequency domain resource, refer to a formula 1-19:

$$\begin{bmatrix} Y(n_1) \\ Y(n_2) \end{bmatrix} = \begin{bmatrix} H_1(n_1) & e^{j\theta} H_2(n_1) \\ H_1^*(n_2) & e^{-j\theta} H_2^*(n_2) \end{bmatrix} \begin{bmatrix} X \\ Z \end{bmatrix} .$$

Formula 1-19

$\hat{X}$ and $\hat{Z}$ may be obtained through estimation by solving the foregoing formula 1-19.

Step a4: The access network device demodulates, based on $\hat{X}$ obtained through estimation, data information sent by the first terminal and demodulates, based on $\hat{Z}$ obtained through estimation, data information sent by the second terminal.

In other words, the access network device may perform demodulation based on the first signal, the second signal, and on the phase precoding information to obtain data information sent by the first terminal and data information sent by second terminal. It should be noted that, when the first terminal sends an uplink communication signal on the first channel other than the first frequency domain resource, the access network device may perform processing in a conventional demodulation manner. When the second terminal sends an uplink communication signal on the second channel other than the first frequency domain resource, the access network device may perform processing in a conventional demodulation manner.

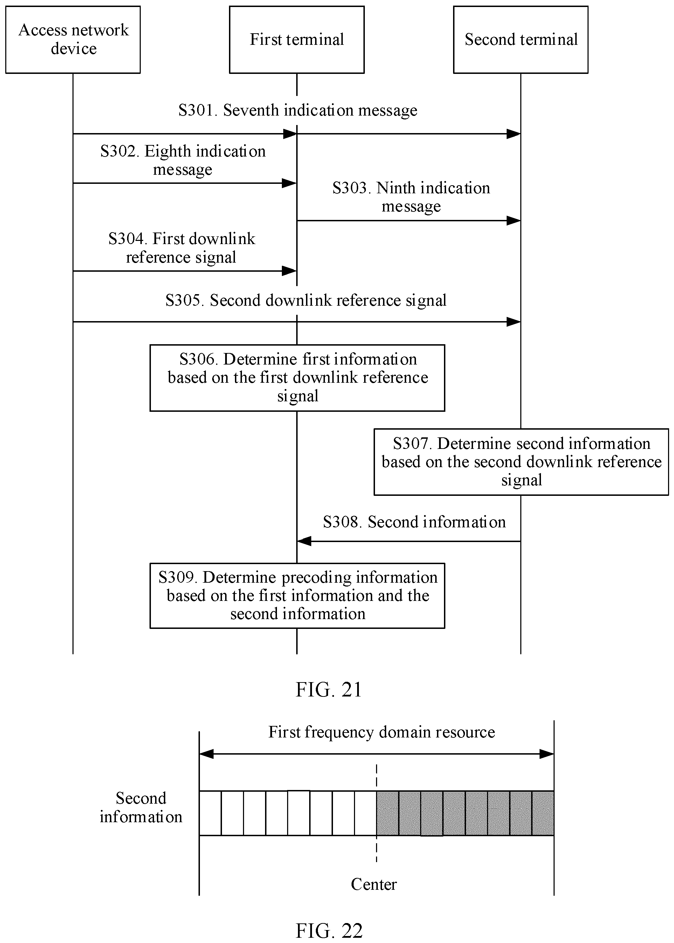

FIG. 21 shows a multi-user communication method according to an embodiment of this application. This embodiment is applied to an uplink transmission scenario. The communication device is a first terminal (or may be a second terminal, and the following uses the first terminal as an example for description. For a case in which the second terminal is an execution body, refer to this manner). The first terminal obtains first information and second information, determines phase precoding information based on the first information and the second information, and then notifies the second terminal, to enable the second terminal to process an uplink communication signal based on the phase precoding information, and/or the first terminal to process the uplink communication signal based on the phase precoding information. The method includes the following steps. Implementations of step S301 to step S308 may be considered as a specific implementation of step S101.

S301. The access network device sends a seventh indication message to the first terminal and the second terminal, where the seventh indication message indicates that the first channel and the second channel overlap with each other on the first frequency domain resource.

The first frequency domain resource is an overlapping part between the first channel and the second channel, the first channel is a channel between the first terminal and the access network device, and the second channel is a channel between the second terminal and the access network device.

For example, the seventh indication message may include identifiers of the first terminal and the second terminal, and may further include information about the first frequency domain resource. The seventh indication message may indicate that there is an overlap between the first terminal and the second terminal. In other words, the first channel corresponding to the first terminal and the second channel corresponding to the second terminal have an overlapping part, and the overlapping part is the first frequency domain resource.

S302. The access network device sends an eighth indication message to the first terminal, where the eighth indication message indicates the first terminal to obtain second information from the second terminal.

In a possible implementation, the eighth indication message may be carried in a seventh message sent by the access network device to the first terminal.

S303. After the first terminal receives the eighth indication message from the access network device, the first terminal sends a ninth indication message to the second terminal based on the eighth indication message, where the ninth indication message indicates the second terminal to send the second information to the first terminal.

Optionally, the first terminal may send the ninth indication message to the second terminal through a sidelink.

S304. The access network device sends a first downlink reference signal to the first terminal.

The first downlink reference signal is for the first terminal to estimate channel information of the first terminal on a first frequency domain resource. For example, the first downlink reference signal may be a signal such as a channel state information reference signal (CSI-RS), a demodulation reference signal (demodulation reference signal, DMRS) of a physical downlink shared channel (physical downlink shared channel, PDSCH), a demodulation reference signal of a physical downlink control channel (physical downlink control channel, PDCCH), or a phase-tracking reference signal (phase-tracking reference signal, PTRS).

Optionally, the access network device may send the first downlink reference signal to the first terminal through a first channel. Optionally, the access network device may send the first downlink reference signal to the first terminal on the first frequency domain resource of the first channel.

S305. The access network device sends a second downlink reference signal to the second terminal.

The second downlink reference signal is for the second terminal to estimate channel information of the second terminal on the first frequency domain resource. For example, the second downlink reference signal may be a signal such as a channel state information reference signal (CSI-RS), a demodulation reference signal (demodulation reference signal, DMRS) of a physical downlink shared channel (physical downlink shared channel, PDSCH), a demodulation reference signal of a physical downlink control channel (physical downlink control channel, PDCCH), or a phase-tracking reference signal (phase-tracking reference signal, PTRS).

Optionally, the access network device may send the second downlink reference signal to the first terminal through a second channel. Optionally, the access network device may send the second downlink reference signal to the first terminal on the first frequency domain resource of the second channel.

S306. After the first terminal receives, on the first frequency domain resource, the first downlink reference signal from the access network device, the first terminal determines first information based on the first downlink reference signal.

S307. After the second terminal receives, on the first frequency domain resource, the second downlink reference signal from the access network device, the second terminal determines the second information based on the second downlink reference signal.

S308. The second terminal sends the second information to the first terminal based on the ninth indication message.

In a possible implementation, the second information includes channel information of the second terminal on the first frequency domain resource.

In another possible implementation, because phases of signals transmitted on symmetric subcarriers on the second channel are opposite, and amplitudes of the signals transmitted on the symmetric subcarriers are in a multiple relationship (or may be equal), channel information corresponding to the other subcarrier may be deduced based on channel information corresponding to one subcarrier in the pair of symmetric subcarriers. For example, a signal transmitted on the second channel is an SC-OQAM signal or a DFT-s-OFDM with FTSS signal. For details, refer to descriptions in the foregoing descriptions. In this case, the second information may include channel information of the second channel of the second terminal on a second frequency domain resource, and the second frequency domain resource is a first half or a second half of the first frequency domain resource. Due to symmetry of subcarriers, the first terminal may deduce channel information on the other half of the first frequency domain resource other than the second frequency domain resource based on the channel information of the second channel of the second terminal on the second frequency domain resource, to determine channel information of the second terminal on the first frequency domain resource. In this manner, the second information does not need to include channel information on the entire first frequency domain resource, so that signaling overheads of the second terminal can be reduced.

For example, FIG. 22 is a schematic diagram of a frequency domain resource corresponding to a second signal according to an embodiment of this application. One grid represents one subcarrier, this schematic manner is also applicable to a similar diagram, and details are not described below again. For example, the second information may include channel information of the second terminal in the first half (which may be understood as the second frequency domain resource) of the first frequency domain resource. Due to conjugate symmetry of the signal, the first terminal may determine channel information of the second terminal on the first frequency domain resource based on the second information.

In another possible implementation, the second channel is a line-of-sight wireless (line of sight, LOS) channel. Due to a characteristic of the LOS channel, channels of the second terminal on all subcarriers are the same or approximately the same. Therefore, in this case, the second information may include channel information corresponding to one subcarrier of the second channel. The first terminal may determine the channel information of the second terminal on the first frequency domain resource based on channel information on one subcarrier on the first frequency domain resource.

For example, FIG. 23 is a schematic diagram of a frequency domain resource corresponding to a second signal according to an embodiment of this application. For example, the second information may include channel information of the second terminal on one subcarrier of the first frequency domain resource. Due to a characteristic of the LOS channel, the first terminal may determine the channel information of the second terminal on the first frequency domain resource based on the channel information on the one subcarrier on the first frequency domain resource.

Optionally, in this implementation, the terminal device may predefine that if channel information at one subcarrier position fed back by the other terminal device is received, all channel information of a channel is deduced based on the channel information at the one subcarrier position. In other words, receiving channel information at one subcarrier position is equivalent to receiving all channel information of a channel corresponding to the one subcarrier. Optionally, when the terminal device knows that channel coefficients of the other terminal device are the same or approximately the same (that is, the terminal device knows a channel characteristic of the other terminal device in advance), the terminal device may indicate the other terminal device to feed back channel information at only one subcarrier position.

S309. After the first terminal receives the second information from the second terminal, the first terminal determines phase precoding information based on the first information and the second information.

It should be noted that, for that the first terminal determines the phase precoding information based on the first information and the second information, refer to the content of the principle part described above. For example, refer to formula 1-11 to formula 1-13.

In a possible implementation, the phase precoding information is information used by the second terminal to precode a second signal. The second signal is a signal on the first frequency domain resource of the second channel. It should be noted that in this manner, the first terminal does not need to perform extra precoding processing on a signal on the first frequency domain resource of the first channel. The method further includes: The first terminal sends a first indication message to the second terminal. The first indication message indicates the phase precoding information. After the second terminal receives the first indication message from the first terminal, the second terminal may process, based on the phase precoding information, an uplink communication signal sent on the first frequency domain resource of the second channel.

In this manner, after the second terminal processes, based on the phase precoding information, the uplink communication signal sent on the first frequency domain resource of the second channel, channel correlation between an equivalent channel of the second channel on the first frequency domain resource and an equivalent channel of the first channel on the first frequency domain resource (in this case, an original channel of the first channel on the first frequency domain resource) is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

In another possible implementation, the phase precoding information is information used by the first terminal to precode a first signal. The first signal is a signal on the first frequency domain resource of the first channel. It should be noted that in this manner, the second terminal does not need to perform extra precoding processing on a signal on the first frequency domain resource of the second channel. The method further includes: The first terminal precodes the first signal based on the phase precoding information. Optionally, the first terminal may also send an indication message to the second terminal. The indication message indicates that phase precoding information corresponding to second terminal is 1, that is, it is understood that the second terminal does not need to perform extra precoding processing.

In this manner, after the first terminal processes, based on the phase precoding information, the uplink communication signal sent on the first frequency domain resource of the first channel, channel correlation between an equivalent channel of the second channel (in this case, an original channel of the second channel on the first frequency domain resource) on the first frequency domain resource and an equivalent channel of the first channel on the first frequency domain resource is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

In another possible implementation, the phase precoding information includes first phase precoding information used by the first terminal to precode a first signal, where the first signal is a signal on the first frequency domain resource of the first channel; and second phase precoding information used by the second terminal to precode a second signal, where the second signal is a signal on the first frequency domain resource of the second channel. The method further includes: The first terminal precodes the first signal based on the first phase precoding information. The first terminal sends a fourth indication message to the second terminal. The fourth indication message indicates second phase precoding information. After the second terminal receives the first indication message from the first terminal, the second terminal may process, based on the second phase precoding information, an uplink communication signal sent on the first frequency domain resource of the second channel.

In this manner, after the first terminal processes, based on the first phase precoding information, an uplink communication signal sent on the first frequency domain resource of the first channel, and the second terminal processes, based on the second phase precoding information, an uplink communication signal sent on the first frequency domain resource of the second channel, channel correlation between an equivalent channel of the second channel on the first frequency domain resource and an equivalent channel of the first channel on the first frequency domain resource is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

The foregoing describes a manner in which the first terminal determines the phase precoding information required by the first terminal and/or the second terminal for processing a signal in an uplink transmission scenario. It should be noted that, in this manner, the first terminal may feed back the phase precoding information to the access network device, to help the access network device to process, based on the phase precoding information, received signals sent by the first terminal and the second terminal. It should be noted that, for a manner in which the access network device processes, based on the phase precoding information, the received signals sent by the first terminal and the second terminal, refer to the descriptions of the content of step a1 to step a4. Details are not described herein again.

FIG. 24 is a flowchart of another multi-user communication method according to an embodiment of this application. This embodiment is applied to a downlink transmission scenario. The communication device is the access network device. The access network device obtains the first information and the second information, further determines the phase precoding information based on the first information and the second information, and then processes a downlink communication signal by using the phase precoding information. The method includes the following steps.

S401. The access network device (that is, a communication device) sends a fifth indication message to the first terminal, where the fifth indication message indicates the first terminal to send a first uplink reference signal to the access network device.

S402. After the first terminal receives the fifth indication message from the access network device, the first terminal sends the first uplink reference signal to the access network device based on the fifth indication message.

S403. The access network device sends a sixth indication message to the second terminal, where the sixth indication message indicates the second terminal to send a second uplink reference signal to the access network device.

S404. After the second terminal receives the sixth indication message from the access network device, the first terminal sends the second uplink reference signal to the access network device based on the sixth indication message.

S405. After the access network device receives the first uplink reference signal sent by the first terminal and the second uplink reference signal sent by the second terminal, the access network device determines first information based on the first uplink reference signal, and determines second information based on the second uplink reference signal.

It should be noted that, for implementations of step S401 to step S405 in the foregoing descriptions, refer to the descriptions of the implementations of step S201 to step S205 in the foregoing descriptions. Details are not described herein again.

S406. The access network device determines phase precoding information based on the first information and the second information.

It should be noted that, for that the access network device determines the phase precoding information based on the first information and the second information, refer to the content of the principle part described above. For example, refer to formula 1-11 to formula 1-13.

In this embodiment, the phase precoding information is information used by the access network device to precode a signal on the first frequency domain resource of the first channel and/or information used by the access network device to precode a signal on the first frequency domain resource of the second channel; and

S407. The access network device precodes a signal on the first frequency domain resource of the first channel and/or a signal on the first frequency domain resource of the second channel based on the phase precoding information.

In this manner, after the access network device processes, based on the phase precoding information, the downlink communication signals sent on the first frequency domain resource of the first channel and/or the second channel, channel correlation between an equivalent channel of the second channel on the first frequency domain resource and an equivalent channel of the first channel on the first frequency domain resource is less than channel correlation between the second channel and the first channel on the first frequency domain resource. In other words, processing the communication signal in such a precoding mode provided in this embodiment of this application can improve channel conditions of the terminal devices on the frequency resource, reduce interference between signals sent by the two terminal devices, and improve receiving performance of the terminal devices on the frequency resource.

Optionally, the access network device may further send the phase precoding information to the first terminal and the second terminal, to enable the first terminal and the second terminal to process received signals by using the phase precoding information.

In some embodiments, the method further includes: The access network device sends a seventh indication message to the first terminal and the second terminal. The seventh indication message indicates that the first channel and the second channel overlap with each other on the first frequency domain resource.

For example, the seventh indication message may include identifiers of the first terminal and the second terminal, and may further include information about the first frequency domain resource. The seventh indication message may indicate that there is an overlap between the first terminal and the second terminal. In other words, the first channel corresponding to the first terminal and the second channel corresponding to the second terminal have an overlapping part, and the overlapping part is the first frequency domain resource.

It should be noted that, an execution sequence of sending the seventh indication message is not limited in this embodiment. For example, the sending may be performed before step S401.

In a possible implementation, the seventh indication message may further indicate one of the two terminals that have an overlap to obtain a signal received by the other terminal on the first frequency domain resource, or indicate one terminal to send, to the other terminal, a signal received by the one terminal on the first frequency domain resource. For example, the eighth indication information may further indicate the first terminal to obtain a fourth signal received by the second terminal on the first frequency domain resource, and indicates the second terminal to obtain a third signal received by the first terminal on the first frequency domain resource. In another example, the eighth indication message may further indicate the first terminal to send, to the second terminal, a third signal received by the first terminal on the first frequency domain resource, and indicate the second terminal to send, to the first terminal, a fourth signal received by the second terminal on the first frequency domain resource.

In another possible implementation, the access network device further sends a tenth indication message to the first terminal. The tenth indication message indicates the first terminal to obtain a fourth signal received by the second terminal on the first frequency domain resource, or indicates the first terminal to send, to the second terminal, a third signal received by the first terminal on the first frequency domain resource. In addition, the access network device further sends an eleventh indication message to the second terminal. The eleventh indication message indicates the second terminal to obtain the third signal received by the first terminal on the first frequency domain resource, or indicates the second terminal to send, to the first terminal, the fourth signal received by the second terminal on the first frequency domain resource.

Because the access network device sends the downlink communication signals of the first terminal and the second terminal on the first frequency domain resource, in the foregoing manner, one of the two terminals that overlap with each other may not only obtain a signal received by itself on the first frequency domain resource, but also obtain a signal received by the other terminal on the first frequency domain resource. Further, the first terminal may obtain, by jointly demodulating the third signal received by the first terminal and the fourth signal received by the second terminal, more accurate data information sent by the access network device to the first terminal. Similarly, the second terminal may obtain, by jointly demodulating the fourth signal received by the second terminal and the third signal received by the first terminal, more accurate data information sent by the access network device to the second terminal.

In this manner, a manner in which the first terminal jointly demodulates the third signal received by itself and the fourth signal received by the second terminal is described below. It may be understood that a manner in which the second terminal jointly demodulates the fourth signal received by the second terminal and the third signal received by the first terminal is similar to the following manner, and details are not described herein again.

Step b1: The first terminal receives a third signal sent by the access network device through the first frequency domain resource and a fourth signal sent by the second terminal.

The received signal may be shown in a formula 1-20:

$$\begin{bmatrix} Y(n_1) \\ Y(n_2) \end{bmatrix} = \begin{bmatrix} H_1(n_1) & H_2(n_1) \\ H_1^*(n_2) & H_2^*(n_2) \end{bmatrix} \begin{bmatrix} X \\ Z \end{bmatrix}, \text{where} \qquad \text{Formula 1-20}$$

$n_1$ represents a subcarrier index $n_1$, and $n_2$ represents a subcarrier index $n_2$. $Y(n_1)$ is a received signal corresponding to a subcarrier at $n_1$, and $Y(n_2)$ is a received signal corresponding to a subcarrier at $n_2$. $X$ is a sent signal corresponding to the subcarrier at $n_1$, and $Z$ is a sent signal corresponding to the subcarrier at $n_2$.

Step b2: The first terminal performs multi-UE joint demodulation based on the third signal, the fourth signal, and the phase precoding information.

For combined reception of signals (which may also be referred to as overlapping signals) received by the first terminal and the second terminal on the first frequency domain resource, refer to a formula 1-21:

$$\begin{bmatrix} \hat{X} \\ \hat{Z} \end{bmatrix} = \frac{\mathrm{H}^H \mathrm{Y}}{\mathrm{H}^H \mathrm{H} + \delta^2} \ . \hspace{3cm} \text{Formula 1-21}$$

For a mode in which first terminal and the second terminal precode subcarriers $[n_1, n_2]$ on the first frequency domain resource, refer to a formula 1-22:

$$\begin{bmatrix} e^{j\theta_0} \\ e^{j\theta_0 + \theta} \end{bmatrix} . \hspace{3cm} \text{Formula 1-22}$$

If same precoding is used on the subcarriers $[n_1, n_2]$, for a manner of performing combined receiving on the received signals on the first frequency domain resource, refer to a formula 1-23:

$$\begin{bmatrix} Y(n_1) \\ Y(n_2) \end{bmatrix} = \begin{bmatrix} H_1(n_1) & e^{j\theta} H_2(n_1) \\ H_1^*(n_2) & e^{-j\theta} H_2^*(n_2) \end{bmatrix} \begin{bmatrix} X \\ Z \end{bmatrix}, \text{where} \hspace{2cm} \text{Formula 1-23}$$

$\hat{X}$ and $\hat{Z}$ may be obtained through estimation by solving the foregoing formula 1-23.

Step a4: The first terminal demodulates, based on $\hat{X}$ obtained through estimation, data information sent to the first terminal and demodulates, based on $\hat{Z}$ obtained through estimation, data information sent to the second terminal.

In other words, the first terminal may obtain, through demodulation based on the third signal, the fourth signal, and the phase precoding information, data information sent by the access network device to the first terminal. Optionally, the first terminal may further send, to the second terminal, demodulated data information that is sent by the access network device to the second terminal, to enable the second terminal to determine, based on both the data information demodulated by the first terminal and the data information demodulated by itself, the data information sent by the access network device to the second terminal. In the foregoing implementation, performance of demodulating a received signal by the terminal can be improved.

It should be noted that, for a downlink communication signal received by the first terminal on the first channel other than the first frequency domain resource, the first terminal may process the downlink communication signal in a conventional demodulation manner.

FIG. 25 is a flowchart of another multi-user communication method according to an embodiment of this application. This embodiment is applied to a downlink transmission scenario. The communication device is the first terminal (or may be the second terminal). The first terminal obtains the first information and the second information, determines the phase precoding information based on the first information and the second information, and then notifies the access network device of the phase precoding information, to enable the access network device to process a downlink communication signal based on the phase precoding information. The method includes the following steps.

S501. The access network device sends a seventh indication message to the first terminal and the second terminal, where the seventh indication message indicates that the first channel and the second channel overlap with each other on the first frequency domain resource.

S502. The access network device sends an eighth indication message to the first terminal, where the eighth indication message indicates the first terminal to obtain second information from the second terminal.

S503. After the first terminal receives the eighth indication message from the access network device, the first terminal sends a ninth indication message to the second terminal based on the eighth indication message, where the ninth indication message indicates the second terminal to send the second information to the first terminal.

S504. The access network device sends a first downlink reference signal to the first terminal.

S505. The access network device sends a second downlink reference signal to the second terminal.

S506. After the first terminal receives, on the first frequency domain resource, the first downlink reference signal from the access network device, the first terminal determines first information based on the first downlink reference signal.

S507. After the second terminal receives, on the first frequency domain resource, the second downlink reference signal from the access network device, the second terminal determines the second information based on the second downlink reference signal.

S508. The second terminal sends the second information to the first terminal based on the ninth indication message.

It should be noted that, for implementations of step S501 to step S508 in the foregoing descriptions, refer to implementations of step S301 to step S308 in the foregoing descriptions. Details are not described herein again.

S509. After the first terminal receives the second information from the second terminal, the first terminal determines phase precoding information based on the first information and the second information.

It should be noted that, for that the first terminal determines the phase precoding information based on the first information and the second information, refer to the content of the principle part described above. For example, refer to formula 1-11 to formula 1-13.

In this embodiment, the phase precoding information is information used by the access network device to precode a signal on the first frequency domain resource of the first channel and/or information used by the access network device to precode a signal on the first frequency domain resource of the second channel; and

S510. The first terminal sends the phase precoding information to the access network device.

Optionally, the first terminal may further send the phase precoding information to the second terminal, to enable the second terminal to process a received signal by using the phase precoding information.

S511. After the access network device receives the phase precoding information from the first terminal, the access network device precodes a signal on the first frequency domain resource of the first channel and/or a signal on the first frequency domain resource of the second channel based on the phase precoding information.

In some embodiments, the method further includes the following steps:

The access network device further sends a tenth indication message to the first terminal. The tenth indication message indicates the first terminal to obtain a fourth signal received by the second terminal on the first frequency domain resource, or indicates the first terminal to send, to the second terminal, a third signal received by the first terminal on the first frequency domain resource.

The access network device sends an eleventh indication message to the second terminal. The eleventh indication message indicates the second terminal to obtain the third signal received by the first terminal on the first frequency domain resource, or indicates the second terminal to send, to the first terminal, the fourth signal received by the second terminal on the first frequency domain resource.

Because the access network device sends the downlink communication signals of the first terminal and the second terminal on the first frequency domain resource, in the foregoing manner, one of the two terminals that overlap with each other may not only obtain a signal received by itself on the first frequency domain resource, but also obtain a signal received by the other terminal on the first frequency domain resource. Further, the first terminal may obtain, by jointly demodulating the third signal received by the first terminal and the fourth signal received by the second terminal, more accurate data information sent by the access network device to the first terminal. Similarly, the second terminal may obtain, by jointly demodulating the fourth signal received by the second terminal and the third signal received by the first terminal, more accurate data information sent by the access network device to the second terminal.

It should be noted that, for a manner in which the first terminal jointly demodulates the third signal received by itself and the fourth signal received by the second terminal, and a manner in which the second terminal jointly demodulates the fourth signal received by itself and the third signal received by the first terminal, refer to descriptions of step b 1 to step b4 in the foregoing descriptions. Details are not described herein again.

To implement the functions in the foregoing methods provided in embodiments of this application, the access network device, the first terminal, and the second terminal may include a hardware structure and a software module, and implement the foregoing functions in a form of the hardware structure, the software module, or a combination of the hardware structure and the software module. One of the foregoing functions may be performed by the hardware structure, the software module, or the combination of the hardware structure and the software module.

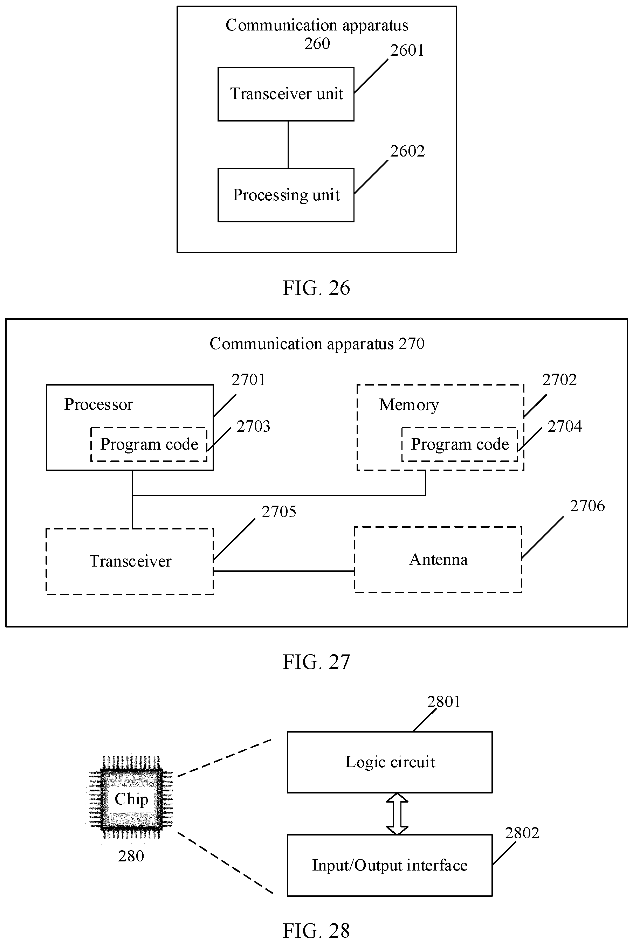

FIG. 26 is a schematic diagram of a structure of a communication apparatus according to an embodiment of this application. The communication apparatus 260 may be an access network device, or may be an apparatus in an access network device, or may be an apparatus that can be used in a manner of matching an access network device. Alternatively, the communication apparatus 260 may be a terminal device (a first terminal or a second terminal), or may be an apparatus in a terminal device, or may be an apparatus that can be used in a manner of matching a terminal device. The communication apparatus 260 includes a transceiver unit 2601 and a processing unit 2602. The following describes the two units in detail.

The transceiver unit 2601 is configured to obtain first information and second information, where the first information indicates channel information of a first channel on a first frequency domain resource, the second information indicates channel information of a second channel on the first frequency domain resource, the first channel is a channel between a first terminal and an access network device, the second channel is a channel between a second terminal and the access network device, and the first channel and the second channel overlap with each other on the first frequency domain resource, where phases of signals transmitted on symmetric subcarriers on the first channel are opposite, and phases of signals transmitted on symmetric subcarriers on the second channel are opposite. For operations performed by the transceiver unit 2601, refer to the descriptions of step S101 in FIG. 16.

The processing unit 2602 is configured to determine phase precoding information based on the first information and the second information, where after precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource. Through this method, demodulation performance of a communication signal can be improved. For operations performed by the processing unit 2602, refer to the descriptions of step S102 in FIG. 16.

In a possible implementation, the communication apparatus is the access network device or the first terminal. The phase precoding information is information used by the second terminal to precode a second signal. The second signal is a signal on the first frequency domain resource of the second channel. The transceiver unit 2601 is further configured to send a first indication message to the second terminal. The first indication message indicates the phase precoding information.

In a possible implementation, the communication apparatus is the access network device. The phase precoding information includes first phase precoding information used by the first terminal to precode a first signal, where the first signal is a signal on the first frequency domain resource of the first channel; and second phase precoding information used by the second terminal to precode a second signal, where the second signal is a signal on the first frequency domain resource of the second channel. The transceiver unit 2601 is further configured to send a second indication message to the first terminal, where second indication message indicates the first phase precoding information; and send a third indication message to the second terminal, where the third indication message indicates the second phase precoding information.

In a possible implementation, the communication apparatus is the first terminal. The phase precoding information is information used by the first terminal to precode a first signal. The first signal is a signal on the first frequency domain resource of the first channel. The processing unit 2602 is further configured to precode the first signal based on the phase precoding information.

In a possible implementation, the communication apparatus is the first terminal. The phase precoding information includes first phase precoding information used by the first terminal to precode a first signal, where the first signal is a signal on the first frequency domain resource of the first channel; and second phase precoding information used by the second terminal to precode a second signal, where the second signal is a signal on the first frequency domain resource of the second channel. The processing unit 2602 is further configured to precode the first signal based on the first phase precoding information. The transceiver unit 2601 is further configured to send a fourth indication message to the second terminal. The fourth indication message indicates the second phase precoding information.

In a possible implementation, the communication apparatus is the access network device. The transceiver unit 2601 is specifically configured to send a fifth indication message to the first terminal, where the fifth indication message indicates the first terminal to send a first uplink reference signal to the communication apparatus; send a sixth indication message to the second terminal, where the sixth indication message indicates the second terminal to send a second uplink reference signal to the communication apparatus; receive the first uplink reference signal sent by the first terminal and the second uplink reference signal sent by the second terminal; and determine the first information based on the first uplink reference signal, and determine the second information based on the second uplink reference signal.

In a possible implementation, a sending time of the first uplink reference signal is different from a sending time of the second uplink reference signal, or the first uplink reference signal and the second uplink reference signal are orthogonal signals.

In a possible implementation, the fifth indication message indicates the first terminal to send the first uplink reference signal to the communication apparatus on a second frequency domain resource. The second frequency domain resource is a first half or a second half of the first frequency domain resource. The sixth indication message indicates the second terminal to send the second uplink reference signal to the communication apparatus on a third frequency domain resource. The third frequency domain resource is a first half or a second half of the first frequency domain resource.

In a possible implementation, the fifth indication message indicates the first terminal to send the first uplink reference signal to the communication apparatus on a fourth frequency domain resource. The fourth frequency domain resource is a first half or a second half of a first half of the first frequency domain resource, or a first half or a second half of a second half of the first frequency domain resource. The sixth indication message indicates the second terminal to send the first uplink reference signal to the communication apparatus on a fifth frequency domain resource. The fifth frequency domain resource is a first half or a second half of a first half of the first frequency domain resource, or a first half or a second half of a second half of the first frequency domain resource. The fourth frequency domain resource is different from the fifth frequency domain resource.

In a possible implementation, the first channel and the second channel are line of sight LOS channels. The fifth indication message indicates the first terminal to send the first uplink reference signal to the communication apparatus on one subcarrier on the first frequency domain resource. The sixth indication message indicates the second terminal to send the second uplink reference signal to the communication apparatus on one subcarrier on the first frequency domain resource.

In a possible implementation, the communication apparatus is the first terminal, and the transceiver unit 2601 is specifically configured to: receive a seventh indication message from the access network device, where the seventh indication message indicates that the first channel and the second channel overlap with each other on the first frequency domain resource; receive an eighth indication message from the access network device, where the eighth indication message indicates the communication apparatus to obtain the second information from the second terminal; send a ninth indication message to the second terminal based on the eighth indication message, where the ninth indication message indicates the second terminal to send the second information to the communication apparatus; receive the second information from the second terminal; receive a downlink reference signal from the access network device; and determine the first information based on the downlink reference signal.

In a possible implementation, the second information includes channel information of the second channel on a second frequency domain resource, and the second frequency domain resource is a first half or a second half of the first frequency domain resource.

In a possible implementation, the second channel is a line of sight LOS channel, and the second information includes channel information corresponding to one subcarrier of the second channel.

In a possible implementation, the communication apparatus is the access network device. The phase precoding information is information used by the access network device to precode a signal on the first frequency domain resource of the first channel and/or information used by the access network device to precode a signal on the first frequency domain resource of the second channel. The processing unit 2602 is further configured to precode the signal on the first frequency domain resource of the first channel and/or the signal on the first frequency domain resource of the second channel based on the phase precoding information.

In a possible implementation, the transceiver unit 2601 is further configured to send a seventh indication message to the first terminal and the second terminal. The seventh indication message indicates that the first channel and the second channel overlap with each other on the first frequency domain resource.

In a possible implementation, the transceiver unit 2601 is further configured to send a tenth indication message to the first terminal, where the tenth indication message indicates the first terminal to obtain a fourth signal received by the second terminal on the first frequency domain resource, or indicates the first terminal to send, to the second terminal, a third signal received by the first terminal on the first frequency domain resource; and send an eleventh indication message to the second terminal, where the eleventh indication message indicates the second terminal to obtain the third signal received by the first terminal on the first frequency domain resource, or indicates the second terminal to send, to the first terminal, the fourth signal received by the second terminal on the first frequency domain resource.

In a possible implementation, the communication apparatus is the first terminal. The phase precoding information is information used by the access network device to precode a signal on the first frequency domain resource of the first channel and/or information used by the access network device to precode a signal on the first frequency domain resource of the second channel. The transceiver unit 2601 is further configured to send the phase precoding information to the access network device.

In a possible implementation, the transceiver unit 2601 is further configured to: receive a signal that is obtained after the precoding is performed and that is sent by the access network device; receive a tenth indication message sent by the access network device, where the tenth indication message indicates the communication apparatus to obtain the fourth signal received by the second terminal on the first frequency domain resource, or indicates the communication apparatus to send, to the second terminal, the third signal received by the first terminal on the first frequency domain resource.

In a possible implementation, the communication apparatus is the access network device, and the transceiver unit 2601 is further configured to receive the first signal sent by the first terminal through the first frequency domain resource of the first channel; and receive the second signal sent by the second terminal through the first frequency domain resource of the second channel. The processing unit 2602 is further configured to perform demodulation based on the first signal, the second signal, and the phase precoding information to obtain data information sent by the first terminal and data information sent by the second terminal.

In a possible implementation, the communication apparatus is the first terminal, and the transceiver unit 2601 is further configured to: receive the third signal sent by the access network device on the first frequency domain resource; and receive the fourth signal that is sent by the second terminal and that is received by the second terminal on the first frequency domain resource. The processing unit 2602 is further configured to perform demodulation based on the third signal, the fourth signal, and the phase precoding information to obtain data information sent by the access network device to the communication apparatus.

Specifically, for operations performed by the units of the communication apparatus 260 shown in FIG. 26, refer to related content of the communication device (which may be the access network device, the first terminal, or the second terminal) in the method embodiments corresponding to FIG. 16, FIG. 17, FIG. 21, FIG. 24, and FIG. 25. Details are not described herein again. The foregoing units may be implemented by hardware, software, or a combination of software and hardware. In an embodiment, functions of the transceiver unit 2601 and the processing unit 2602 in the foregoing descriptions may be implemented by one or more processors in the communication apparatus 260.

FIG. 27 is a schematic diagram of a structure of another communication apparatus according to an embodiment of this application. The communication apparatus 270 may be configured to implement the methods described in the foregoing method embodiments. For details, refer to the descriptions in the foregoing method embodiments.

The communication apparatus 270 may include one or more processors 2701. The processor 2701 may be a general-purpose processor, a dedicated processor, or the like. The processor 2701 may be configured to control a communication apparatus (for example, a network device, a network device chip, a terminal device, or a terminal device chip), execute a software program, and process data of the software program.

Optionally, the communication apparatus 270 may include one or more memories 2702, and program code 2704 may be stored in the one or more memories 2702. The program code may be run on the processor 2701, to enable the communication apparatus 270 to perform the method described in the foregoing method embodiments. Optionally, the memory 2702 may further store data. The processor 2701 and the memory 2702 may be separately arranged, or may be integrated together.

Optionally, the communication apparatus 270 may further include a transceiver 2705 and an antenna 2706. The transceiver 2705 may be referred to as a transceiver unit, a transceiver machine, a transceiver circuit, or the like, and is configured to implement a transceiver function. The transceiver 2705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The processor 2701 is configured to obtain first information and second information through the transceiver 2705. The first information indicates channel information of a first channel on a first frequency domain resource. The second information indicates channel information of a second channel on the first frequency domain resource. The first channel is a channel between a first terminal and an access network device. The second channel is a channel between a second terminal and the access network device. The first channel and the second channel overlap with each other on the first frequency domain resource. Phases of signals transmitted on symmetric subcarriers on the first channel are opposite. Phases of signals transmitted on symmetric subcarriers on the second channel are opposite.

The processor 2701 is further configured to determine phase precoding information based on the first information and the second information. After precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource.

It should be noted that in the foregoing embodiment, the communication apparatus 270 may be an access network device, or may be a terminal device, or may be a chip, a chip system, a processor, or the like that supports the access network device or the terminal device in implementing the foregoing method, or may be a chip, a chip system, a processor, or the like that supports the access network device or the terminal device in implementing the foregoing method.

Specifically, for operations performed by the communication apparatus 270, refer to related content of the communication device (which may be the access network device, the first terminal, or the second terminal) in the method embodiments corresponding to FIG. 16, FIG. 17, FIG. 21, FIG. 24, and FIG. 25. Details are not described herein again.

In another possible design, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 2701 may store program code 2703, and the program code 2703 is run on the processor 2701, to enable the communication apparatus 270 to perform the method described in the foregoing method embodiments. The program code 2703 may be solidified in the processor 2701. In this case, the processor 2701 may be implemented by hardware.

In another possible design, the communication apparatus 270 may include a circuit. The circuit may implement a sending, receiving, or communication function in the foregoing method embodiments.

The processor and the transceiver that are described in this application may be implemented on an integrated circuit (integrated circuit, IC), an analog IC, a radio frequency integrated circuit RFIC, a hybrid signal IC, an application-specific integrated circuit (application specific integrated circuit, ASIC), a printed circuit board (printed circuit board, PCB), an electronic device, or the like.

The communication apparatus in the foregoing embodiment may be a network device or a terminal device. However, a scope of the communication apparatus described in this application is not limited thereto, and a structure of the communication apparatus may not be limited by FIG. 27. The communication apparatus may be an independent device or may be a part of a large device. For example, the communication apparatus may be:

(1) an independent integrated circuit IC, a chip, or a chip system or subsystem;

(2) a set of one or more ICs, where optionally, the IC set may also include a storage component configured to store data and program code;

(3) an ASIC such as a modem (Modem);

(4) a module that can be embedded in another device;

(5) a receiver, an intelligent terminal, a wireless device, a handheld device, a mobile unit, an in-vehicle device, a cloud device, an artificial intelligence device, and the like; and

(6) others.

For a case in which the communication apparatus may be a chip or a chip system, refer to a schematic diagram of a structure of a chip shown in FIG. 28. A chip 280 shown in FIG. 28 includes a logic circuit 2801 and an input/output interface 2802. There may be one or more logic circuits 2801, and there may be a plurality of input/output interfaces 2802.

The input/output interface 2802 is configured to obtain first information and second information. The first information indicates channel information of a first channel on a first frequency domain resource. The second information indicates channel information of a second channel on the first frequency domain resource. The first channel is a channel between a first terminal and an access network device. The second channel is a channel between a second terminal and the access network device. The first channel and the second channel overlap with each other on the first frequency domain resource. Phases of signals transmitted on symmetric subcarriers on the first channel are opposite. Phases of signals transmitted on symmetric subcarriers on the second channel are opposite.

The logic circuit 2801 is configured to process the first signal and the second signal, and perform the following operation: determining phase precoding information based on the first information and the second information. After precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource.

Specifically, in this case, for operations performed by the logic circuit 2801, refer to related content of the communication device (which may be the access network device, the first terminal, or the second terminal) in the method embodiments corresponding to FIG. 16, FIG. 17, FIG. 21, FIG. 24, and FIG. 25. Details are not described herein again.

A person skilled in the art may further understand that various illustrative logical blocks (illustrative logic block) and steps (step) that are listed in embodiments of this application may be implemented by electronic hardware, computer software, or a combination thereof. Whether the functions are implemented by hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium storing a computer program. When the computer-readable storage medium is executed by a computer, the function in any one of the foregoing method embodiments is implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or may be a data storage device, such as a server or a data center that integrates one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like. It should be understood that the processing apparatus may be a chip, and the processor may be implemented by hardware or software.

A person of ordinary skill in the art may understand that various numerals such as "first" and "second" in this application are merely used for differentiation for ease of description, and are not used to limit the scope or a sequence of embodiments of this application.

The correspondences shown in the tables in this application may be configured, or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, a hash list, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**Claims**

1. A multi-user communication method, comprising:

   obtaining, by a communication device, first information and second information, wherein the first information indicates channel information of a first channel on a first frequency domain resource, the second information indicates channel information of a second channel on the first frequency domain resource, the first channel is a channel between a first terminal and an access network device, the second channel is a channel between a second terminal and the access network device, and the first channel and the second channel overlap with each other on the first frequency domain resource, wherein phases of signals transmitted on symmetric subcarriers on the first channel are opposite, and phases of signals transmitted on symmetric subcarriers on the second channel are opposite; and
   determining, by the communication device, phase precoding information based on the first information and the second information, wherein after precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource.

2. The method according to claim 1, wherein the communication device is the access network device or the first terminal, and the phase precoding information is information used by the second terminal to precode a second signal, wherein the second signal is a signal on the first frequency domain resource of the second channel; and the method further comprises:
   sending, by the communication device, a first indication message to the second terminal, wherein the first indication message indicates the phase precoding information.

3. The method according to claim 1, wherein the communication device is the access network device, and the phase precoding information comprises first phase precoding information used by the first terminal to precode a first signal, wherein the first signal is a signal on the first frequency domain resource of the first channel; and second phase precoding information used by the second terminal to precode a second signal, wherein the second signal is a signal on the first frequency domain resource of the second channel; and
   the method further comprises:

   sending, by the communication device, a second indication message to the first terminal, wherein the second indication message indicates the first phase precoding information; and

sending, by the communication device, a third indication message to the second terminal, wherein the third indication message indicates the second phase precoding information.

4. The method according to claim 1, wherein the communication device is the first terminal, and the phase precoding information is information used by the first terminal to precode a first signal, wherein the first signal is a signal on the first frequency domain resource of the first channel; and
the method further comprises:
precoding, by the communication device, the first signal based on the phase precoding information.

5. The method according to claim 1, wherein the communication device is the first terminal, and the phase precoding information comprises first phase precoding information used by the first terminal to precode a first signal, wherein the first signal is a signal on the first frequency domain resource of the first channel; and second phase precoding information used by the second terminal to precode a second signal, wherein the second signal is a signal on the first frequency domain resource of the second channel; and
the method further comprises:

precoding, by the communication device, the first signal based on the first phase precoding information; and
sending, by the communication device, a fourth indication message to the second terminal, wherein the fourth indication message indicates the second phase precoding information.

6. The method according to any one of claims 1 to 3, wherein the communication device is the access network device, and the obtaining, by a communication device, first information and second information comprises:

sending, by the communication device, a fifth indication message to the first terminal, wherein the fifth indication message indicates the first terminal to send a first uplink reference signal to the communication device;
sending, by the communication device, a sixth indication message to the second terminal, wherein the sixth indication message indicates the second terminal to send a second uplink reference signal to the communication device;
receiving, by the communication device, the first uplink reference signal sent by the first terminal and the second uplink reference signal sent by the second terminal; and
determining, by the communication device, the first information based on the first uplink reference signal, and determining the second information based on the second uplink reference signal.

7. The method according to claim 6, wherein a sending time of the first uplink reference signal is different from a sending time of the second uplink reference signal, or the first uplink reference signal and the second uplink reference signal are orthogonal signals.

8. The method according to claim 6 or 7, wherein the fifth indication message indicates the first terminal to send the first uplink reference signal to the communication device on a second frequency domain resource, wherein the second frequency domain resource is a first half or a second half of the first frequency domain resource; and
the sixth indication message indicates the second terminal to send the second uplink reference signal to the communication device on a third frequency domain resource, wherein the third frequency domain resource is a first half or a second half of the first frequency domain resource.

9. The method according to claim 6 or 7, wherein

the fifth indication message indicates the first terminal to send the first uplink reference signal to the communication device on a fourth frequency domain resource, wherein the fourth frequency domain resource is a first half or a second half of a first half of the first frequency domain resource, or a first half or a second half of a second half of the first frequency domain resource;
the sixth indication message indicates the second terminal to send the first uplink reference signal to the communication device on a fifth frequency domain resource, wherein the fifth frequency domain resource is a first half or a second half of a first half of the first frequency domain resource, or a first half or a second half of a second half of the first frequency domain resource; and
the fourth frequency domain resource is different from the fifth frequency domain resource.

10. The method according to claim 6 or 7, wherein the first channel and the second channel are line of sight LOS channels;

the fifth indication message indicates the first terminal to send the first uplink reference signal to the communication device on one subcarrier on the first frequency domain resource; and

the sixth indication message indicates the second terminal to send the second uplink reference signal to the communication device on one subcarrier on the first frequency domain resource.

11. The method according to claim 1, 4, or 5, wherein the communication device is the first terminal, and the obtaining, by a communication device, first information and second information comprises:

receiving, by the communication device, a seventh indication message from the access network device, wherein the seventh indication message indicates that the first channel and the second channel overlap with each other on the first frequency domain resource;

receiving, by the communication device, an eighth indication message from the access network device, wherein the eighth indication message indicates the communication device to obtain the second information from the second terminal;

sending, by the communication device, a ninth indication message to the second terminal based on the eighth indication message, wherein the ninth indication message indicates the second terminal to send the second information to the communication device;

receiving, by the communication device, the second information from the second terminal;

receiving, by the communication device, a downlink reference signal from the access network device; and

determining, by the communication device, the first information based on the downlink reference signal.

12. The method according to claim 11, wherein the second information comprises channel information of the second channel on a second frequency domain resource, wherein the second frequency domain resource is a first half or a second half of the first frequency domain resource.

13. The method according to claim 11, wherein the second channel is a line of sight LOS channel, and the second information comprises channel information corresponding to one subcarrier of the second channel.

14. The method according to claim 1, wherein the communication device is the access network device, and the phase precoding information is information used by the access network device to precode a signal on the first frequency domain resource of the first channel and/or information used by the access network device to precode a signal on the first frequency domain resource of the second channel; and

the method further comprises:

precoding, by the communication device, the signal on the first frequency domain resource of the first channel and/or the signal on the first frequency domain resource of the second channel based on the phase precoding information.

15. The method according to claim 14, wherein the method further comprises:

sending, by the communication device, a seventh indication message to the first terminal and the second terminal, wherein the seventh indication message indicates that the first channel and the second channel overlap with each other on the first frequency domain resource.

16. The method according to claim 14 or 15, wherein the method further comprises:

sending, by the communication device, a tenth indication message to the first terminal, wherein the tenth indication message indicates the first terminal to obtain a fourth signal received by the second terminal on the first frequency domain resource, or indicates the first terminal to send, to the second terminal, a third signal received by the first terminal on the first frequency domain resource; and

sending, by the communication device, an eleventh indication message to the second terminal, wherein the eleventh indication message indicates the second terminal to obtain the third signal received by the first terminal on the first frequency domain resource, or indicates the second terminal to send, to the first terminal, the fourth signal received by the second terminal on the first frequency domain resource.

17. The method according to claim 1, wherein the communication device is the first terminal, and the phase precoding information is information used by the access network device to precode a signal on the first frequency domain resource of the first channel and/or information used by the access network device to precode a signal on the first frequency domain resource of the second channel; and

the method further comprises:

sending, by the communication device, the phase precoding information to the access network device.

**18.** The method according to claim 17, wherein the method further comprises:

receiving, by the communication device, a signal that is obtained after the precoding is performed and that is sent by the access network device; and

receiving, by the communication device, a tenth indication message sent by the access network device, wherein the tenth indication message indicates the communication device to obtain a fourth signal received by the second terminal on the first frequency domain resource, or indicates the communication device to send, to the second terminal, a third signal received by the first terminal on the first frequency domain resource.

**19.** The method according to any one of claims 1 to 3 and 6 to 10, wherein the communication device is the access network device, and the method further comprises:

receiving, by the communication device, the first signal sent by the first terminal through the first frequency domain resource of the first channel;

receiving, by the communication device, the second signal sent by the second terminal through the first frequency domain resource of the second channel; and

performing, by the communication device, demodulation based on the first signal, the second signal, and the phase precoding information to obtain data information sent by the first terminal and data information sent by the second terminal.

**20.** The method according to claim 1, 17, or 18, wherein the communication device is the first terminal, and the method further comprises:

receiving, by the communication device, the third signal sent by the access network device on the first frequency domain resource;

receiving, by the communication device, the fourth signal that is sent by the second terminal and that is received by the second terminal on the first frequency domain resource; and

performing, by the communication device, demodulation based on the third signal, the fourth signal, and the phase precoding information to obtain data information sent by the access network device to the communication device.

**21.** A communication apparatus, comprising a processing unit and a transceiver unit, wherein

the transceiver unit is configured to obtain first information and second information, wherein the first information indicates channel information of a first channel on a first frequency domain resource, the second information indicates channel information of a second channel on the first frequency domain resource, the first channel is a channel between a first terminal and an access network device, the second channel is a channel between a second terminal and the access network device, and the first channel and the second channel overlap with each other on the first frequency domain resource, wherein phases of signals transmitted on symmetric subcarriers on the first channel are opposite, and phases of signals transmitted on symmetric subcarriers on the second channel are opposite; and

the processing unit is configured to determine phase precoding information based on the first information and the second information, wherein after precoding is performed based on the phase precoding information, channel correlation between an equivalent channel of the second channel on the first frequency domain resource and an equivalent channel of the first channel on the first frequency domain resource is less than channel correlation between the second channel and the first channel on the first frequency domain resource.

**22.** The communication apparatus according to claim 21, wherein the communication apparatus is used in the access network device or the first terminal, and the phase precoding information is information used by the second terminal to precode a second signal, wherein the second signal is a signal on the first frequency domain resource of the second channel; and

the transceiver unit is further configured to:

send a first indication message to the second terminal, wherein the first indication message indicates the phase precoding information.

**23.** The communication apparatus according to claim 21, wherein the communication apparatus is used in the access network device, and the phase precoding information comprises first phase precoding information used by the first terminal to precode a first signal, wherein the first signal is a signal on the first frequency domain resource of the first channel; and second phase precoding information used by the second terminal to precode a second signal, wherein the second signal is a signal on the first frequency domain resource of the second channel; and the transceiver unit is further configured to:

send a second indication message to the first terminal, wherein the second indication message indicates the first phase precoding information; and

send a third indication message to the second terminal, wherein the third indication message indicates the second phase precoding information.

24. The communication apparatus according to claim 21, wherein the communication apparatus is used in the first terminal, and the phase precoding information is information used by the first terminal to precode a first signal, wherein the first signal is a signal on the first frequency domain resource of the first channel; and the processing unit is further configured to:
precode the first signal based on the phase precoding information.

25. The communication apparatus according to claim 21, wherein the communication apparatus is used in the first terminal, and the phase precoding information comprises first phase precoding information used by the first terminal to precode a first signal, wherein the first signal is a signal on the first frequency domain resource of the first channel; and second phase precoding information used by the second terminal to precode a second signal, wherein the second signal is a signal on the first frequency domain resource of the second channel; and the processing unit is further configured to:

precoding, by the communication device, the first signal based on the first phase precoding information; and
the transceiver unit is further configured to:
send a fourth indication message to the second terminal, wherein the fourth indication message indicates the second phase precoding information.

26. The communication apparatus according to any one of claims 21 to 23, wherein the communication apparatus is used in the access network device, and the transceiver unit is specifically configured to:

send a fifth indication message to the first terminal, wherein the fifth indication message indicates the first terminal to send a first uplink reference signal to the communication device;
send a sixth indication message to the second terminal, wherein the sixth indication message indicates the second terminal to send a second uplink reference signal to the communication device;
receive the first uplink reference signal sent by the first terminal and the second uplink reference signal sent by the second terminal; and
determine the first information based on the first uplink reference signal, and determine the second information based on the second uplink reference signal.

27. The communication apparatus according to claim 26, wherein a sending time of the first uplink reference signal is different from a sending time of the second uplink reference signal, or the first uplink reference signal and the second uplink reference signal are orthogonal signals.

28. The communication apparatus according to claim 26 or 27, wherein the fifth indication message indicates the first terminal to send the first uplink reference signal to the communication device on a second frequency domain resource, wherein the second frequency domain resource is a first half or a second half of the first frequency domain resource; and
the sixth indication message indicates the second terminal to send the second uplink reference signal to the communication device on a third frequency domain resource, wherein the third frequency domain resource is a first half or a second half of the first frequency domain resource.

29. The communication apparatus according to claim 26 or 27, wherein

the fifth indication message indicates the first terminal to send the first uplink reference signal to the communication device on a fourth frequency domain resource, wherein the fourth frequency domain resource is a first half or a second half of a first half of the first frequency domain resource, or a first half or a second half of a second half of the first frequency domain resource;
the sixth indication message indicates the second terminal to send the first uplink reference signal to the communication device on a fifth frequency domain resource, wherein the fifth frequency domain resource is a first half or a second half of a first half of the first frequency domain resource, or a first half or a second half of a second half of the first frequency domain resource; and
the fourth frequency domain resource is different from the fifth frequency domain resource.

30. The communication apparatus according to claim 26 or 27, wherein the first channel and the second channel are line of sight LOS channels;

the fifth indication message indicates the first terminal to send the first uplink reference signal to the communication device on one subcarrier on the first frequency domain resource; and
the sixth indication message indicates the second terminal to send the second uplink reference signal to the communication device on one subcarrier on the first frequency domain resource.

31. The communication apparatus according to any one of claim 21, 24, or 25, wherein the communication apparatus is used in the first terminal, and the transceiver unit is specifically configured to:

receive a seventh indication message from the access network device, wherein the seventh indication message indicates that the first channel and the second channel overlap with each other on the first frequency domain resource;
receive an eighth indication message from the access network device, wherein the eighth indication message indicates the communication device to obtain the second information from the second terminal;
send a ninth indication message to the second terminal based on the eighth indication message, wherein the ninth indication message indicates the second terminal to send the second information to the communication device;
receive the second information from the second terminal;
receive a downlink reference signal from the access network device; and
determine the first information based on the downlink reference signal.

32. The communication apparatus according to claim 31, wherein the second information comprises channel information of the second channel on a second frequency domain resource, wherein the second frequency domain resource is a first half or a second half of the first frequency domain resource.

33. The communication apparatus according to claim 31, wherein the second channel is a line of sight LOS channel, and the second information comprises channel information corresponding to one subcarrier of the second channel.

34. The communication apparatus according to claim 21, wherein the communication apparatus is used in the access network device, and the phase precoding information is information used by the access network device to precode a signal on the first frequency domain resource of the first channel and/or information used by the access network device to precode a signal on the first frequency domain resource of the second channel; and
the transceiver unit is further configured to:
precode the signal on the first frequency domain resource of the first channel and/or the signal on the first frequency domain resource of the second channel based on the phase precoding information.

35. The communication apparatus according to claim 24, wherein the transceiver unit is further configured to:
send a seventh indication message to the first terminal and the second terminal, wherein the seventh indication message indicates that the first channel and the second channel overlap with each other on the first frequency domain resource.

36. The communication apparatus according to claim 24 or 25, wherein the transceiver unit is further configured to:

send a tenth indication message to the first terminal, wherein the tenth indication message indicates the first terminal to obtain a fourth signal received by the second terminal on the first frequency domain resource, or indicates the first terminal to send, to the second terminal, a third signal received by the first terminal on the first frequency domain resource; and
send an eleventh indication message to the second terminal, wherein the eleventh indication message indicates the second terminal to obtain the third signal received by the first terminal on the first frequency domain resource, or indicates the second terminal to send, to the first terminal, the fourth signal received by the second terminal on the first frequency domain resource.

37. The communication apparatus according to claim 21, wherein the communication apparatus is used in the first terminal, and the phase precoding information is information used by the access network device to precode a signal on the first frequency domain resource of the first channel and/or information used by the access network device to precode a signal on the first frequency domain resource of the second channel; and
the transceiver unit is further configured to:
send the phase precoding information to the access network device.

38. The communication apparatus according to claim 37, wherein the transceiver unit is further configured to:

   receive a signal that is obtained after the precoding is performed and that is sent by the access network device; and
   receive a tenth indication message sent by the access network device, wherein the tenth indication message indicates the communication device to obtain a fourth signal received by the second terminal on the first frequency domain resource, or indicates the communication device to send, to the second terminal, a third signal received by the first terminal on the first frequency domain resource.

39. The communication apparatus according to any one of claims 21 to 23 and 26 to 30, wherein the communication apparatus is used in the access network device, and the transceiver unit is further configured to:

   receive the first signal sent by the first terminal through the first frequency domain resource of the first channel;
   receive the second signal sent by the second terminal through the first frequency domain resource of the second channel; and
   the processing unit is further configured to:
   perform demodulation based on the first signal, the second signal, and the phase precoding information to obtain data information sent by the first terminal and data information sent by the second terminal.

40. The communication apparatus according to claim 21, 37, or 38, wherein the communication apparatus is used in the first terminal, and the transceiver unit is further configured to:

   receive the third signal sent by the access network device on the first frequency domain resource;
   receive the fourth signal that is sent by the second terminal and that is received by the second terminal on the first frequency domain resource; and
   the processing unit is further configured to:
   perform demodulation based on the third signal, the fourth signal, and the phase precoding information to obtain data information sent by the access network device to the communication device.

41. A communication apparatus, comprising: a processor, wherein the processor is coupled to a memory;

   the memory is configured to store program code; and
   the processor is configured to invoke the program code in the memory to perform the method according to any one of claims 1 to 20.

42. A communication apparatus, wherein the communication apparatus comprises a logic circuit and an input/output interface, wherein

   the input/output interface is configured to obtain first information and second information; and
   the logic circuit is configured to process the first information and the second information, and perform the method according to any one of claims 1 to 20.

43. A computer-readable storage medium, wherein the computer-readable storage medium is configured to store instructions, and when the instructions are executed, the method according to any one of claims 1 to 20 is implemented.

44. A computer program product, wherein the computer program product comprises a computer program or instructions, and when the computer program or the instructions are run on a computer, the computer is enabled to perform the method according to any one of claims 1 to 20.

**Terminal device 1**

**Access network device**

**Terminal device 2**

FIG. 1

FIG. 2

N<M

DFT: Discrete Fourier transform

IDFT: Inverse discrete Fourier transform

From an encoder
(from encoder)

To a radio frequency
unit (to RF)

```
          ┌──────────────┐    ┌──────────────┐    ┌──────────────┐
───────▶  │ Modulation   │──▶ │ Up-sampling  │──▶ │Pulse shaping │ ───▶
          │ (modulation) │    │ (up-sampling)│    │(pulse shaping)│
          └──────────────┘    └──────────────┘    └──────────────┘
```

Processing process at a
transmit end

From a radio
frequency unit
(from RF)

To an encoder
(to encoder)

```
          ┌──────────────┐    ┌──────────────┐    ┌──────────────┐
───────▶  │Matched filtering│─▶│ Down-sampling│─▶ │ Demodulation │ ───▶
          │(matched filtering)│ │(down-sampling)│ │   (de-mod)   │
          └──────────────┘    └──────────────┘    └──────────────┘
```

Processing process at a receive
end

FIG. 3

```
┌────────────┐  ┌──────────┐  ┌──────────┐  ┌──────────┐  ┌──────────┐  ┌──────────┐
│ Modulation │  │ Discrete │  │Frequency │  │Subcarrier│  │ Inverse  │  │  Cyclic  │
│(modulation)│─▶│ Fourier  │─▶│ domain   │─▶│ mapping  │─▶│   fast   │─▶│  prefix  │─▶
│            │  │transform │  │ spectrum │  │(subcarrier│ │ Fourier  │  │ addition │
│            │  │  (DFT)   │  │ shaping  │  │ mapping) │  │transform │  │ (add CP) │
│            │  │          │  │  (FDSS)  │  │          │  │  (IFFT)  │  │          │
└────────────┘  └──────────┘  └──────────┘  └──────────┘  └──────────┘  └──────────┘
```

Copying
(copying)

Filtering
(filtering)

FIG. 4

Modulation (modulation) (N)

Real part (real part)

Imaginary part (imag part)

Up-sampling (up-sampling) (2)

Up-sampling (up-sampling) (2)

T/2 delay (delay)

Pulse shaping (pulse shaping)

Down-sampling (down-sampling)

FIG. 5

Complex    It is 0 at another position
signal           carrying a signal

FIG. 6

Real  Imaginary Real  Imaginary
signal   signal   signal    signal

It is not 0 at a next position
carrying an imaginary signal,
where, however, interference is
from a real number

It is 0 at a next position
carrying a real signal

FIG. 7

M

```
┌──────────────┐   ┌──────────────┐   ┌──────────────┐
│  Modulation  │   │  Real part   │   │ Up-sampling  │
│ (modulation) │──▶│ (real part)  │──▶│(up-sampling) │
│     (N)      │   │              │   │     (2)      │
└──────────────┘   └──────────────┘   └──────────────┘
        │
        │          ┌──────────────┐   ┌──────────────┐   ┌──────────────┐
        │          │  Imaginary   │   │ Up-sampling  │   │   1 delay    │
        └─────────▶│    part      │──▶│(up-sampling) │──▶│   (delay)    │
                   │ (imag part)  │   │     (2)      │   │              │
                   └──────────────┘   └──────────────┘   └──────────────┘
```

┌──────────────┐   ┌──────────────┐   ┌──────────────┐   ┌──────────────┐
│   Discrete   │   │              │   │  Subcarrier  │   │ Inverse fast │
│   Fourier    │   │    Filter    │   │   mapping    │   │   Fourier    │
│  transform   │──▶│   (filter)   │──▶│ (subcarrier  │──▶│  transform   │──▶
│ (DFT) (2N)   │   │              │   │   mapping)   │   │    (IFFT)    │
└──────────────┘   └──────────────┘   └──────────────┘   └──────────────┘

FIG. 8

Filtering (filtering)

| A | Flip(A*) |

FIG. 9

Overlapping (overlap) part

Channel of a
terminal
device 1

Channel of a
terminal
device 2

FIG. 10

Copying
(copying)

Filtering
(filtering)

Symmetry
point 1

Symmetry
point 2

Original
spectrum width

Spectrum width
after extension

Original
spectrum width

Spectrum width
after extension

FIG. 11

$X(n_1)$   $X^*(n_2)$

UE 1

UE 2

$Z(n_1)$   $Z^*(n_2)$   $f$

FIG. 12

$Z(n_1)$   $Z^*(n_2)$   $f$

FIG. 13

$e^{j\theta}r_1 e^{j\beta_1}$

$r_1 e^{j\beta_1}$

$r_2 e^{j\beta_2}$

$e^{-j\theta}r_2 e^{j\beta_2}$

FIG. 14

FIG. 15

S101. A communication device obtains first information and second information, where the first information indicates channel information of a first channel on a first frequency domain resource, and the second information indicates channel information of a second channel on the first frequency domain resource

S102. The communication device determines precoding information based on the first information and the second information

FIG. 16

```
┌─────────────┐        ┌──────────────┐         ┌───────────────┐
│Access network│       │First terminal│         │Second terminal│
│   device    │        │              │         │               │
└──────┬──────┘        └──────┬───────┘         └───────┬───────┘
       │   S201. Fifth indication  │                    │
       │────────message──────────→ │                    │
       │   S202. First uplink reference                 │
       │ ←──────── signal ──────────│                    │
       │                            │                    │
       │      S203. Sixth indication message            │
       │────────────────────────────────────────────────→│
       │                            │                    │
       │       S204. Second uplink reference signal      │
       │ ←───────────────────────────────────────────────│
       │                            │                    │
┌──────┴──────────────────────────┐ │                   │
│ S205. Determine first information│ │                   │
│ based on the first uplink        │ │                   │
│ reference signal, and determine  │ │                   │
│ second information based on the  │ │                   │
│ second uplink reference signal   │ │                   │
└──────┬──────────────────────────┘ │                   │
┌──────┴──────────────────────────┐ │                   │
│ S206. Determine precoding        │ │                   │
│ information based on the first   │ │                   │
│ information and the second       │ │                   │
│ information                      │ │                   │
└──────┬──────────────────────────┘ │                   │
       │                            │                    │
```

FIG. 17

First frequency domain resource

First terminal

Second terminal

Center

FIG. 18

FIG. 19

FIG. 20

```
┌──────────────┐        ┌──────────────┐        ┌──────────────┐
│Access network│        │First terminal│        │Second terminal│
│   device     │        │              │        │              │
└──────┬───────┘        └──────┬───────┘        └──────┬───────┘
       │    S301. Seventh indication message            │
       │────────────────────────┼───────────────────────▶│
       │  S302. Eighth indication│                        │
       │        message          │                        │
       │─────────────────────────▶│                        │
       │                         │ S303. Ninth indication │
       │                         │       message          │
       │                         │───────────────────────▶│
       │   S304. First downlink  │                        │
       │     reference signal    │                        │
       │─────────────────────────▶│                        │
       │  S305. Second downlink reference signal           │
       │────────────────────────┼───────────────────────▶│
       │          ┌──────────────┴──────────────┐         │
       │          │ S306. Determine first information      │
       │          │ based on the first downlink reference  │
       │          │            signal           │         │
       │          └──────────────┬──────────────┘         │
       │                         │        ┌───────────────┴───────────────┐
       │                         │        │ S307. Determine second information│
       │                         │        │ based on the second downlink reference│
       │                         │        │            signal             │
       │                         │        └───────────────┬───────────────┘
       │                         │  S308. Second information│
       │                         │◀───────────────────────│
       │          ┌──────────────┴──────────────┐         │
       │          │ S309. Determine precoding information   │
       │          │ based on the first information and the  │
       │          │        second information    │         │
       │          └──────────────┬──────────────┘         │
       │                         │                        │
```

FIG. 21

First frequency domain resource

Second
information

Center

FIG. 22

First frequency domain resource

Second
information

Center

FIG. 23

| Access network device | First terminal | Second terminal |

S401. Fifth indication message

S402. First uplink reference signal

S403. Sixth indication message

S404. Second uplink reference signal

S405. Determine first information based on the first uplink reference signal, and determine second information based on the second uplink reference signal

S406. Determine precoding information based on the first information and the second information

S407. Precode a signal on a first frequency domain resource of a first channel and/or a signal on a first frequency domain resource of a second channel based on the precoding information

FIG. 24

```
┌─────────────┐        ┌─────────────┐        ┌─────────────┐
│Access network│        │First terminal│        │   Second    │
│   device    │        │             │        │  terminal   │
└──────┬──────┘        └──────┬──────┘        └──────┬──────┘
```

S501. Seventh indication message

S502. Eighth
indication message

S503. Ninth indication
message

S504. First downlink
reference signal

S505. Second downlink reference signal

S506. Determine first information based
on the first downlink reference signal

S507. Determine second
information based on the second
downlink reference signal

S508. Second
information

S509. Determine precoding information
based on the first information and the
second information

S510. Precoding
information

S511. Precode a signal on a first
frequency domain resource of a first
channel and/or a signal on a first
frequency domain resource of a second
channel based on the precoding
information

FIG. 25

51

Communication apparatus
260
2601

Transceiver unit

2602

Processing unit

FIG. 26

Communication apparatus 270

2701

Processor

2703

Program code

2702

Memory

2704

Program code

2705

Transceiver

2706

Antenna

FIG. 27

2801

Logic circuit

Chip

280

2802

Input/Output interface

FIG. 28

## INTERNATIONAL SEARCH REPORT

| International application No. |
| --- |
| **PCT/CN2022/095468** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04Q7/-; H04M; H04L; H04B

Documentation searched other than minimum documentation to the extent that such documents are included in the fields searched

Electronic data base consulted during the international search (name of data base and, where practicable, search terms used)

CNTXT, CNABS, CNKI, WPABS, VEN, USTXT, WOTXT, EPTXT, 3GPP: 多, 二, 两, 用户, 频域, 重叠, 相位, 相反, 共轭, 单载波, 偏移正交幅度调制, 频域赋形, 正交频分复用, 预编码, 等效信道, 相关, 相干, 干扰, 小, 噪声, 视距, 视线, multi+, second, two, UE, overlap, CA, frequency, opposite, conjugate, SC-OQAM, DFT-s-OFDM, FTSS, phase, precod+, noise, PN, line of sight, LOS

**C. DOCUMENTS CONSIDERED TO BE RELEVANT**

| Category* | Citation of document, with indication, where appropriate, of the relevant passages | Relevant to claim No. |
| --- | --- | --- |
| A | Huawei et al. "R1-160755 "PAPR reduction for multi-tone PUSCH transmissions""<br>*3GPP tsg_ran\WG1_RL1*, 06 February 2016 (2016-02-06),<br>sections 2-6 | 1-44 |
| A | Huawei et al. "R1-1700077 "Discussion on further PAPR reduction of uplink DFT-s-OFDM""<br>*3GPP tsg_ran\WG1_RL1*, 09 January 2017 (2017-01-09),<br>entire document | 1-44 |
| A | CN 110071890 A (HARBIN INSTITUTE OF TECHNOLOGY, SHENZHEN) 30 July 2019<br>(2019-07-30)<br>entire document | 1-44 |
| A | CN 108055223 A (NO.41 RESEARCH INSTITUTE OF CHINA ELECTRONICS<br>TECHNOLOGY GROUP CORPORATION) 18 May 2018 (2018-05-18)<br>entire document | 1-44 |
| A | CN 108353051 A (TELEFONAKTIEBOLAGET LM ERICSSON (PUBL)) 31 July 2018<br>(2018-07-31)<br>entire document | 1-44 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 July 2022** | **27 July 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/095468**

| Patent document cited in search report | | | Publication date (day/month/year) | Patent family member(s) | | | Publication date (day/month/year) |
|---|---|---|---|---|---|---|---|
| CN | 110071890 | A | 30 July 2019 | None | | | |
| CN | 108055223 | A | 18 May 2018 | None | | | |
| CN | 108353051 | A | 31 July 2018 | US | 2017359109 | A1 | 14 December 2017 |
| | | | | EP | 3371945 | A1 | 12 September 2018 |
| | | | | WO | 2017076446 | A1 | 11 May 2017 |

Form PCT/ISA/210 (patent family annex) (January 2015)

**REFERENCES CITED IN THE DESCRIPTION**

**Patent documents cited in the description**

- CN 202110595979